# EUROPEAN PATENT APPLICATION

(11) **EP 4 603 430 A1**
(43) Date of publication of application: **20.08.2025**
(21) Application number: 23954974.4
(22) Date of filing: 30.11.2023
(51) Int. Cl.: B65G 47/90, B65G 47/00, B25J 15/08, B25J 15/00, B25J 9/00, H01M 10/00, B23Q 3/00

(54) **GRABBING DEVICE, GRABBING APPARATUS, BATTERY PRODUCTION LINE AND CONTROL METHOD**

(30) Priority: 13.10.2023 CN 202311323991
(71) Applicant: Contemporary Amperex Technology (Hong Kong) Limited, Central (HK)
(72) Inventor: WU, Kai, Ningde, Fujian 352100 (CN); WEI, Wenchao, Ningde, Fujian 352100 (CN); CHEN, Caisong, Ningde, Fujian 352100 (CN); QIU, Kun, Ningde, Fujian 352100 (CN); LIAO, Shunlin, Ningde, Fujian 352100 (CN); WU, Ying, Ningde, Fujian 352100 (CN)
(74) Representative: Ziebig Hengelhaupt Intellectual Property Attorneys Patentanwaltskanzlei PartGmbB
(86) International application number: PCT/CN2023/135575
(87) International publication number: WO 2025/076951

(57) **Abstract**

A grabbing apparatus (1), a grabbing device, a battery production line, and a control method are provided. The grabbing apparatus (1) includes a rack (11), a clamping plate mechanism (12), and a distance varying mechanism (13), where the rack (11) is configured to connect to a manipulator; the clamping plate mechanism (12) includes two clamping plate assemblies spaced apart and is configured to clamp multiple battery cells (2); the distance varying mechanism (13) is arranged on the rack (11) and drivably connected to the two clamping plate assemblies to adjust a distance between the two clamping plate assemblies; the two clamping plate assemblies are a reference clamping plate assembly (122) and a floatable clamping plate assembly (121); the reference clamping plate assembly (122) is capable of providing a clamping reference for the multiple battery cells (2); and the floatable clamping plate assembly (121) is capable of clamping each battery cell (2) tightly. Due to the grabbing apparatus (1), the grabbing device, the battery production line, and the control method, the battery cell (2) can be grabbed stably.

## Description

### CROSS-REFERENCE TO RELATED APPLICATIONS

This disclosure claims priority to Chinese Patent Application No. 202311323991.2, filed on October 13, 2023 and entitled "GRABBING APPARATUS, GRABBING DEVICE, BATTERY PRODUCTION LINE, AND CONTROL METHOD", which is incorporated herein by reference in its entirety.

### TECHNICAL FIELD

This disclosure relates to the field of battery technologies, and in particular, to a grabbing apparatus, a grabbing device, a battery production line, and a control method.

### BACKGROUND

New energy batteries are used more and more widely in life and industries. For example, new energy vehicles equipped with batteries have been widely used. In addition, batteries are increasingly used in the field of energy storage or the like.

To meet the requirement of rapid development of the battery industry, a grabbing apparatus configured to grab a battery cell and realize automatic loading plays a key role in a fully automatic manufacturing process including automatic loading of battery cells. In the related art, when a grabbing apparatus grabs a battery cell, it is difficult to grab the battery cell stably.

### SUMMARY

In view of this, embodiments of this disclosure expect to provide a grabbing mechanism capable of grabbing a battery cell stably, a grabbing device, a battery production line, and a control method.

To achieve the foregoing objectives, an aspect of the embodiments of this disclosure provides a grabbing apparatus including: a rack, configured to connect to a manipulator; a clamping plate mechanism, including two clamping plate assemblies spaced apart and configured to clamp multiple battery cells; and a distance varying mechanism, arranged on the rack and drivably connected to the two clamping plate assemblies to adjust a distance between the two clamping plate assemblies;
where the two clamping plate assemblies are a reference clamping plate assembly and a floatable clamping plate assembly, the reference clamping plate assembly is capable of providing a clamping reference for the multiple battery cells, and the floatable clamping plate assembly is capable of clamping each battery cell tightly.

In the foregoing technical solution, the rack is provided and is connected to a mechanical arm of the manipulator, so that the rack can be driven to move and/or rotate to complete a subsequent loading operation. The reference clamping plate assembly and the floatable clamping plate assembly are provided. During grabbing of the battery cell, the reference clamping plate assembly can provide a clamping reference for the battery cell, so that shaking of the battery cell is reduced, and clamping stability is improved. Then, in cooperation with the floatable clamping plate assembly, the multiple battery cells can be flexibly clamped tightly, so that damage to the battery cells is reduced. The distance varying mechanism is provided and is drivably connected to the floatable clamping plate assembly and the reference clamping plate assembly, so that a distance between the floatable clamping plate assembly and the battery cell and a distance between the reference clamping plate assembly and the battery cell can be adjusted simultaneously by driving the distance varying mechanism, so as to grab or release the battery cell. In one aspect, balanced and stable forces can be applied on two sides of the battery cell, so as to reduce a risk that the battery cell loses its balance or slips down. In another aspect, the floatable clamping plate assembly and the reference clamping plate assembly move simultaneously, so that a grabbing speed and a releasing speed of the battery cell can be accelerated, and the efficiency is high. In still another aspect, the distance varying mechanism adjusts a distance between the floatable clamping plate assembly and the reference clamping plate assembly, so that battery cells with different dimensions can be grabbed, and the battery cells with different dimensions are infinitely compatible. Therefore, the adaptability and the universality are high.

In some embodiments, the distance varying mechanism includes: a distance varying assembly, arranged on the rack; two first base plates, spaced apart at two ends of the distance varying assembly in a distance varying direction respectively, where the distance varying assembly is drivably connected to the two first base plates to adjust a distance between the two first base plates; and a clamping assembly, arranged on the first base plate and drivably connected to a corresponding clamping plate assembly to adjust the distance between the two clamping plate assemblies.

In the foregoing technical solution, during grabbing of a battery, the distance varying assembly drives the two first base plates to move towards each other, so as to drive the floatable clamping plate assembly and the reference clamping plate assembly to approach the battery cell in a front-back direction; the distance varying assembly stops after the floatable clamping plate assembly and the reference clamping plate assembly move to positions at a preset distance from the battery cell; and then, the clamping assembly adjusts the distance between the two clamping plate assemblies, so as to ensure that the battery cell is clamped tightly. In other words, the distance varying assembly first moves the floatable clamping plate assembly and the reference clamping plate assembly to the positions at the preset distance from the battery cell; and then, the clamping assembly adjusts the floatable clamping plate assembly and the reference clamping plate assembly to clamp the battery cell tightly, so that clamping forces on battery cells with different dimensions are consistent. In one aspect, arrangement of the preset distance means that the same clamping quality and safety can be obtained regardless of a dimension of a battery cell, so as to reduce damage to or unsafety of the battery cell caused by insufficient clamping or too tight clamping. In another aspect, an operator does not need to adjust a clamping force of the clamping assembly frequently, which helps simplify an operation process, improve operation efficiency and reduce a possibility of errors. In still another aspect, the distance varying assembly and the clamping assembly cooperate to clamp battery cells tightly. When battery cells of the same model are clamped, the floatable clamping plate assembly and the reference clamping plate assembly may be moved to positions at the preset distance, and stay still. Subsequently, only the clamping assembly needs to be adjusted. As the distance varying assembly does not need to be adjusted frequently, maintenance costs of the distance varying assembly can be reduced.

In some embodiments, the distance varying assembly includes: a distance varying motor, arranged on the rack; a distance varying lead screw, where the distance varying motor is drivably connected to the distance varying lead screw; two screw nuts, drivably connected to the distance varying lead screw, where each screw nut is connected to a corresponding first base plate; a distance varying slide rail, arranged on the rack; and distance varying sliders, where the distance varying slider is provided on each first base plate or the distance varying slider is provided on each screw nut, and the distance varying slider is capable of sliding on the distance varying slide rail in a fitted manner under the driving of the screw nut.

In the foregoing technical solution, the distance varying lead screw and the screw nut fit each other. In one aspect, the distance varying lead screw and the screw nut can well match each other via thread fit, so that a gap and friction are reduced, and high-precision movement of the floatable clamping plate assembly and the reference clamping plate assembly is realized. In another aspect, cooperation of the distance varying lead screw and the screw nut has a relatively high load capacity, so that a relatively large force and torque can be borne, and bearing capacity is great. The lead screw is driven by the distance varying motor, so that relatively high rotation precision can be realized, so as to ensure that movement precision of the floatable clamping plate assembly and the reference clamping plate assembly is relatively high, and ensure that the distance between the floatable clamping plate assembly and the battery cell and the distance between the reference clamping plate assembly and the battery cell can reach the preset distance. The distance varying slide rail and the distance varying slider fit each other. In one aspect, the distance varying slide rail can provide a smooth and accurate motion path, and the distance varying slider can slide easily in the distance varying slide rail, so that an entire moving process is more precise and controllable. In another aspect, the distance varying slide rail can provide extra support and stability, so that shaking or unstable sliding of the distance varying slider in the moving process is avoided, and motion stability is high.

In some embodiments, two distance varying slide rails are provided, the two distance varying slide rails are spaced apart on two sides of the rack in the distance varying direction respectively, each first base plate is provided with two distance varying sliders spaced apart, and each distance varying slider is in sliding fit with a corresponding distance varying slide rail.

In the foregoing technical solution, the distance varying slide rails and the distance varying sliders are provided on both sides of the front-back direction. Therefore, in one aspect, vibration and shock can be reduced, so as to ensure that the first base plate keeps balanced and stable in a moving process, and that motion smoothness is improved; and in another aspect, as the distance varying slide rails and the distance varying sliders are provided on both sides, load capacity can be further improved, and a greater force and torque can be borne.

In some embodiments, the clamping assembly includes: a clamping drive assembly, arranged on the first base plate; a clamping slide rail, arranged on the first base plate; and a clamping slider, connected to a corresponding clamping plate assembly, where the clamping drive assembly is capable of driving the clamping slider to slide along the clamping slide rail, so as to adjust the distance between the two clamping plate assemblies.

In the foregoing technical solution, after the distance varying assembly adjusts the floatable clamping plate assembly and the reference clamping plate assembly to the positions at the preset distance from the battery cell, the clamping drive assembly may be enabled to drive the clamping slider to slide in the clamping slide rail, so that the clamping plate assembly and the first base plate move relatively. In this way, the floatable clamping plate assembly and the reference clamping plate assembly can tightly clamp or release the battery cell.

Due to arrangement of the clamping drive assembly, movement precision of the clamping plate assembly can be improved, so that a clamping force on the battery cell can be better controlled to reduce falling down, and a service life of the distance varying motor can be prolonged.

The clamping slide rail and the clamping slider fit each other. In one aspect, the clamping slide rail can provide a smooth and accurate motion path, and the clamping slider can slide easily in the clamping slide rail, so that an entire moving process is more precise and controllable. In another aspect, the clamping slide rail can provide extra support and stability, so that shaking or unstable sliding of the clamping slider in the moving process is avoided, and motion stability is high.

In some embodiments, the clamping drive assembly includes: a clamping cylinder, arranged on the first base plate; a transmission slide rail, arranged on the first base plate; a transmission slider, drivably connected to the clamping cylinder, where the transmission slider is capable of sliding on the transmission slide rail in a fitted manner under the driving of the clamping cylinder; a transmission assembly, connected to the transmission slider; and a transmission guide plate, arranged on a corresponding clamping plate assembly, where the transmission assembly is capable of moving with the transmission guide plate in a fitted manner, so as to cause the clamping slider to slide along the clamping slide rail.

In the foregoing technical solution, the clamping cylinder operates to drive the transmission slider to slide in the transmission slide rail. Because the transmission slider is connected to the transmission assembly, the transmission assembly is driven to move in the same direction. In addition, because the other end of the transmission assembly cooperates with the transmission guide plate, and the transmission guide plate is fixedly arranged on the clamping plate assembly, cooperation between the transmission assembly and the transmission guide plate can drive the clamping plate assembly to move through the clamping slider and the clamping slide rail, so as to tightly clamp or release the battery cell.

Herein, due to arrangement of the clamping cylinder, in one aspect, the clamping cylinder has a relatively large clamping force and a self-locking function, so that a tightly clamped state can still be kept under the condition of shutdown to improve safety and reliability; and in another aspect, control of the clamping cylinder is relatively simple, and the control can be realized by using a solenoid valve, a programmable logic controller (PLC), or another device. For example, an occasion, a strength, and clamping time for clamping or releasing can be controlled precisely by adjusting an air supply control signal and an air discharge control signal of the clamping cylinder.

The transmission slide rail and the transmission slider fit each other. In one aspect, the transmission slide rail can provide a smooth and accurate motion path, and the transmission slider can slide easily in the transmission slide rail, so that an entire moving process is more precise and controllable. In another aspect, the transmission slide rail can provide extra support and stability, so that shaking or unstable sliding of the transmission slider in the moving process is avoided, and motion stability is high. Due to cooperation between the transmission assembly and the transmission guide plate, the clamping cylinder can indirectly drive the clamping plate assembly to move, so that shock and vibration of the clamping plate assembly can be reduced, causing the clamping plate assembly to move more smoothly.

In some embodiments, an elongated hole is obliquely formed in the transmission guide plate, and the transmission assembly includes: a transmission seat, connected to the transmission slider, where the clamping cylinder is connected to the transmission seat; a transmission part, connected to the transmission seat; and a transmission wheel, connected to the transmission part, where the transmission wheel is located in the elongated hole and is capable of moving in the elongated hole.

In the foregoing technical solution, clamping the battery cell tightly is used as an example. A piston rod of the clamping cylinder extends out to push a connecting portion and drive a fixing portion, so that the transmission slider moves in the transmission slide rail. In this case, the transmission part below the fixing portion drives the transmission wheel to move in an extension direction of the elongated hole, thereby driving the clamping plate assembly to move to clamp the battery cell tightly.

The oblique elongated hole is formed in the transmission guide plate; the transmission guide plate is fixedly arranged on the clamping plate assembly; and the clamping plate assembly and the first base plate above the clamping plate assembly are in sliding fit with each other through the clamping slide rail and the clamping slider. In this case, when the transmission wheel moves in the elongated hole, because the extension direction of the elongated hole is oblique to an extending direction of the clamping cylinder, the clamping plate assembly moves in the oblique direction to tightly clamp or release the battery cell. Due to arrangement of the transmission seat, the transmission part, the transmission wheel, and the oblique elongated hole, a movement direction of the clamping cylinder can be changed to a direction in which the clamping plate assembly is pushed towards or away from the battery cell. Therefore, layouts of the clamping cylinder and the like can be changed, and a dimension of the grabbing apparatus can be reduced.

In some embodiments, two transmission slide rails and two transmission sliders are provided, the two transmission slide rails are spaced apart on the first base plate, an extension direction of the transmission slide rail is perpendicular to an extension direction of the clamping slide rail, the two transmission sliders are spaced apart on the transmission seat, and each transmission slider is in sliding fit with a corresponding transmission slide rail; and/or
the transmission part includes two vertical plates spaced apart, a transverse plate connected between the two vertical plates, a transmission rod, and a mounting nut, where the transmission wheel is mounted at one end of the transmission rod, the other end of the transmission rod penetrates the transverse plate and is located between the two vertical plates, and the mounting nut fastens the transmission rod onto the transverse plate.

In the foregoing technical solution, due to arrangement of the two transmission slide rails and the two transmission sliders, in one aspect, vibration and shock can be reduced, so as to ensure that the transmission assembly keeps balanced and stable in a moving process, and that motion smoothness is improved; and in another aspect, load capacity can be further improved, and a greater force and torque can be borne.

Due to the transmission assembly and the oblique elongated hole of the transmission guide plate, the extension direction of the transmission slide rail can be perpendicular to the extension direction of the clamping slide rail, which means that the clamping cylinder can be arranged in a left-right direction. Therefore, a dimension of the grabbing apparatus in the front-back direction can be reduced, and a structure is more compact. Due to the two vertical plates spaced apart in the left-right direction and the transverse plate connected between the two vertical plates, in one aspect, the transmission rod can be protected in the left-right direction to prolong a service life of the transmission rod; and in another aspect, the two vertical plates and the transverse plate can improve structural strength of the transmission rod in the left-right direction, so as to ensure that the transmission rod can bear a heavier load.

In some embodiments, four clamping drive assemblies are provided, and each first base plate is provided with two clamping drive assemblies spaced apart. In the foregoing technical solution, as each first base plate is provided with two clamping drive assemblies, forces can be exerted on both sides of the clamping plate assembly in the left-right direction, so as to ensure that the clamping plate assembly moves more smoothly, and a clamping force exerted on the battery cell is more uniform. In addition, as each base plate is provided with two clamping drive assemblies, load capacity of the base plate can be further improved, and working capacity and reliability of the grabbing apparatus can be improved.

In some embodiments, the grabbing apparatus further includes: multiple stroke limiting members, each configured to limit a stroke of a corresponding clamping cylinder. In the foregoing technical solution, when the piston rod of the clamping cylinder extends out to drive the transmission assembly to move, the stroke limiting member may stop the transmission assembly, so as to avoid an over-large clamping force on the battery cell caused by excessive movement of the transmission assembly. Therefore, safety is high.

In some embodiments, the stroke limiting member includes a hydraulic buffer and/or a rigid limiting member. In the foregoing technical solution, a portion of a hydraulic limiting member penetrates an abutting part and is located on a side of the connecting portion away from the clamping cylinder in the left-right direction, and a portion of the rigid limiting member penetrates the abutting part and is located on a side of the transmission part away from the clamping cylinder in the left-right direction, so that safety is high.

In some embodiments, the grabbing apparatus further includes: multiple position detection mechanisms, each configured to detect a position of a corresponding transmission slider. In the foregoing technical solution, the position detection mechanism can ensure safety detection for clamping of the battery cell, so that safety is high.

In some embodiments, the position detection mechanism includes:
multiple first position sensors, spaced apart on the first base plate and configured to detect a position of the transmission slider; and
a sensor plate, arranged on the transmission assembly or the transmission slider and configured to sense the first position sensor.

In the foregoing technical solution, the sensor plate may be arranged on the transmission seat, or may be arranged on the transmission slider. Each transmission slider is provided with two first position sensors. The two first position sensors are spaced apart in the left-right direction on a side surface of the first base plate away from the battery cell in the front-back direction. Each first position sensor is provided with a sensing groove. A movement amount of the transmission slider can be determined when the sensor plate moves into the sensing groove along with the transmission slider. Then, a clamping force on the battery cell can be determined. Therefore, an over-large clamping force on the battery cell caused by excessive movement is avoided, and safety is high.

In some embodiments, the first position sensors are a loosening limit position sensor and a clamping limit position sensor; and
the loosening limit position sensor is configured to detect a maximum limit position of the transmission slider, and the clamping limit position sensor is configured to detect a minimum limit position of the transmission slider.

In the foregoing technical solution, the clamping limit position sensor and the loosening limit position sensor may be configured to determine whether the clamping plate assembly is in a clamped state in which the battery cell is clamped tightly, or in a loosed state in which the battery cell is kept at the preset distance. Therefore, clamping detection for the battery cell is realized, so as to avoid a phenomenon that the battery cell is not clamped tightly and falls down.

In some embodiments, the reference clamping plate assembly includes: a second base plate, drivably connected to the distance varying mechanism; a first back plate, connected to the second base plate; and multiple first clamping plates, mounted on the first back plate side by side, fixed relative to the first back plate, and configured to clamp the battery cell.

In the foregoing technical solution, because the first clamping plate is fixed relative to the first back plate, the battery cell can be supported rigidly to reduce phenomena that the battery cell shakes.

In some embodiments, the grabbing apparatus further includes: multiple battery cell sensors, spaced apart on the first back plate and configured to detect the battery cell.

In the foregoing technical solution, the multiple battery cell sensors are provided to detect sizes, dimensions, positions, and other information of the multiple battery cells below the battery cell sensors, so that the battery cells can be grabbed stably.

In some embodiments, the floatable clamping plate assembly includes: a third base plate, drivably connected to the distance varying mechanism; a second back plate, connected to the third base plate; and multiple floatable clamping plate kits, mounted on the second back plate side by side, capable of moving in a distance varying direction relative to the second back plate, and configured to clamp the battery cell.

In the foregoing technical solution, the distance varying mechanism operates to drive the third base plate, so as to drive the second back plate and the multiple floatable clamping plate kits to move in the distance varying direction. After the floatable clamping plate kits are in contact with the battery cells, the floatable clamping plate kits can move in the distance varying direction relative to the second back plate, so that batteries are further clamped tightly, and a clamping effect is good.

In some embodiments, the floatable clamping plate kit includes: a floatable clamping plate, configured to clamp the battery cell; a floatable back plate, where the floatable back plate and the floatable clamping plate are respectively located on two sides of the second back plate; a connecting screw rod, penetrating the floatable back plate and connected to the floatable clamping plate; an elastic member, located between the floatable clamping plate and the second back plate; and a sleeve, located between the floatable back plate and the second back plate.

In the foregoing technical solution, as the elastic member is arranged between the floatable clamping plate and the second back plate, the clamping cylinder operates after the distance varying motor pushes the two clamping plate assemblies to the positions at the preset distance from the battery cell. When the clamping cylinder pushes the floatable clamping plate assembly to approach the battery cell in the front-back direction, the floatable clamping plate is in contact with the battery cell first, and the floatable clamping plate kits continue moving. In this case, the floatable clamping plate cannot continue moving due to blocking of the battery cell; and the connecting screw rod is movable relative to the second back plate and the floatable back plate. Therefore, the second back plate can continue moving, so as to compress the elastic member between the second back plate and the floatable clamping plate. The elastic member stores elastic potential energy when being compressed. The clamping cylinder stops when the sensor plate is located in the sensing groove of the clamping limit position sensor. In this case, deformation of the elastic member restores in the front-back direction. Being stopped by the second back plate behind the elastic member, the elastic potential energy stored by the elastic member is converted into kinetic energy, so as to provide a force for the floatable clamping plate, by which the floatable clamping plate approaches the battery cell in the front-back direction. In this case, the battery cell can be tightly clamped between the first clamping plate and the floatable clamping plate flexibly under the action of the elastic member.

As a portion of the connecting screw rod between the second back plate and the floatable back plate is sleeved with the sleeve, a specific pre-tightening force on the elastic member between the second back plate and the floatable clamping plate can be maintained to reduce phenomena that the floatable clamping plate shakes when the battery cell is not clamped tightly. Therefore, stability is high.

In some embodiments, multiple second back plates are provided, the multiple second back plates are arranged side by side on the third base plate, and multiple floatable clamping plate kits are provided on each second back plate. In the foregoing technical solution, due to arrangement of the multiple floatable clamping plate kits and the second back plate, the multiple battery cells can be grabbed and clamped tightly at the same time, so that efficiency is high.

In some embodiments, multiple mounting slide grooves are formed in the third base plate side by side, a mounting slide plate is provided on the second back plate, the mounting slide plate is arranged in the mounting slide groove, and the mounting slide plate is tightly connected to the third base plate; and/or
the floatable clamping plate assembly further includes a pull handle arranged on the second back plate.

In the foregoing technical solution, the second back plate and the third base plate can move in the front-back direction via a sliding fit between the mounting slide plate and the mounting slide groove. In one aspect, when the floatable clamping plate kit, the second back plate, or both need to be overhauled or replaced, the second back plate can be pulled out in the front-back direction away from the battery cell through the mounting slide plate and the mounting slide groove. After being replaced or repaired completely, the second back plate can be pushed in the front-back direction towards the battery cell through the mounting slide plate and the mounting slide groove. Therefore, a mounting speed and a demounting speed are high. In another aspect, the mounting slide groove can provide a smooth and accurate motion path, and the mounting slide plate can slide easily in the mounting slide groove, so that an entire moving process is more precise and controllable. In still another aspect, the mounting slide groove can provide extra support and stability, so that shaking or unstable sliding of the mounting slide plate in the moving process is avoided. When the floatable clamping plate kit needs to be repaired and replaced, the pull handle can provide a stable support point for an operator, so that replace efficiency and repair efficiency are improved.

In some embodiments, the floatable clamping plates are configured in such a manner that each battery cell is clamped by at least two floatable clamping plates.

In the foregoing technical solution, each battery cell is clamped by at least two floatable clamping plates, so that unstable clamping of the battery cell can be avoided.

In some embodiments, the grabbing apparatus further includes: an anti-falling mechanism, arranged on the distance varying mechanism and provided with a transverse first position, a transverse second position, a vertical third position, and a vertical fourth position, where when being located at the transverse first position and the vertical fourth position, the anti-falling mechanism is configured to prevent a mounting bolt of the clamping plate assembly from falling down; when being located at the transverse first position and the vertical third position, the anti-falling mechanism is configured to press foam for the battery cell during grabbing of the battery cell; and
when being located at the transverse second position and the vertical fourth position, the anti-falling mechanism is configured to prevent the battery cell from falling down.

In the foregoing technical solution, when the grabbing apparatus is in an initial state, the anti-falling mechanism thereon is located at the transverse first position and the vertical fourth position. In this case, the anti-falling mechanism can press upwards the mounting bolt under the bearing portion, so that shaking of the first clamping plate caused by falling down of the mounting bolt can be avoided. When the grabbing apparatus grabs the battery cell, the anti-falling mechanism thereon is located at the transverse first position and the vertical third position. In this case, the anti-falling mechanism can press downwards foam accommodating the battery cell, so that lifting of the foam during grabbing of the battery cell can be avoided. When the grabbing mechanism grabs the battery cell for loading, the anti-falling mechanism thereon is located at the transverse second position and the vertical fourth position. In this case, bottom holding support can be provided for a bottom of the battery cell, so that falling down of the battery cell is avoided.

In some embodiments, the anti-falling mechanism includes: a bottom holding rod; and two transversely moving and lifting assemblies, respectively arranged at two ends of the distance varying mechanism, where each transversely moving and lifting assembly is connected to one end of the bottom holding rod, and the transversely moving and lifting assembly includes:
a sliding seat; a transversely moving slide rail, arranged on the distance varying mechanism; a transversely moving slider, arranged on the sliding seat; and a transversely moving cylinder, arranged on the sliding seat and drivably connected to the transversely moving slide rail, so as to enable the transversely moving slider to slide on the transversely moving slide rail in a fitted manner; and
a lifting cylinder, arranged on the sliding seat, where the lifting cylinder is drivably connected to the bottom holding rod and is capable of causing the bottom holding rod to move up and down; and two second position sensors, arranged on the sliding seat and configured to detect the lowest position and the highest position of the bottom holding rod respectively.

In the foregoing technical solution, when the grabbing apparatus is in the initial state, a piston rod of the transversely moving cylinder extends out, and a piston rod of the lifting cylinder retracts, so that the bottom holding rod is located at the transverse first position and the vertical fourth position. In this case, the anti-falling mechanism can press upwards the mounting bolt under the bearing portion, so that shaking of the first clamping plate caused by falling down of the mounting bolt can be avoided. When the grabbing apparatus grabs the battery cell, the piston rod of the transversely moving cylinder extends out, and the piston rod of the lifting cylinder extends out, so that the bottom holding rod is located at the transverse first position and the vertical third position. In this case, the anti-falling mechanism can press downwards foam accommodating the battery cell, so that lifting of the foam during grabbing of the battery cell can be avoided. When the grabbing mechanism grabs the battery cell for loading, the piston rod of the transversely moving cylinder retracts, and the piston rod of the lifting cylinder retracts, so that the bottom holding rod is located at the transverse second position and the vertical fourth position. In this case, bottom holding support can be provided for the bottom of the battery cell, so that falling down of the battery cell is avoided.

Due to arrangement of the two second position sensors, positions of the bottom holding rod can be determined, so that safety detection for bottom holding is realized, and safety is high.

In some embodiments, the grabbing apparatus further includes: a deviation correction apparatus, arranged on the rack and configured to identify a model, dimension, and position of the battery cell.

In the foregoing technical solution, the battery cell can be detected to obtain the model, dimension, and position of the battery cell, so that convenience is brought for subsequent positioning of the grabbing apparatus. Therefore, grabbing of the battery cell can be realized precisely.

Another aspect of the embodiments of this disclosure provides a grabbing device, including a manipulator and the grabbing apparatus in the foregoing embodiments, where the manipulator is configured to be capable of driving the grabbing apparatus to rotate and/or move.

Still another aspect of the embodiments of this disclosure provides a battery production line, including a first conveyor line, a second conveyor line, and the grabbing device in the foregoing embodiments, where the first conveyor line is configured to convey battery cells to be grabbed, and the grabbing device is configured to grab battery cells on the first conveyor line and place the battery cells on the second conveyor line.

Yet another aspect of the embodiments of this disclosure provides a control method, applied to the grabbing apparatus in the foregoing embodiments, where the control method includes: controlling the grabbing apparatus to move, so as to enable the clamping plate mechanism to be located above a battery cell; obtaining parameter information of the battery cell; controlling the grabbing apparatus to move based on the parameter information of the battery cell, so as to enable the clamping plate mechanism to be aligned with the battery cell; and controlling the distance varying mechanism to move based on the parameter information of the battery cell, so as to enable the clamping plate mechanism to clamp the battery cell tightly.

In an embodiment, the step of obtaining parameter information of the battery cell specifically includes: controlling a deviation correction apparatus to obtain the parameter information of the battery cell.

In an embodiment, the step of controlling the distance varying mechanism to move based on the parameter information of the battery cell, so as to enable the clamping plate mechanism to clamp the battery cell tightly specifically includes: controlling a distance varying assembly of the distance varying mechanism to move based on the parameter information of the battery cell, so as to ensure that two clamping plate assemblies of the clamping plate mechanism are at a first distance from each other; and controlling a clamping assembly of the distance varying mechanism to move, so as to ensure that the two clamping plate assemblies are at a second distance for clamping the battery cell tightly, where the second distance is smaller than the first distance.

In an embodiment, after the step of controlling the distance varying mechanism to move based on the parameter information of the battery cell, so as to enable the clamping plate mechanism to clamp the battery cell tightly, the control method includes: controlling the grabbing apparatus to move, so as to enable the grabbing apparatus to be located at a safe height; controlling an anti-falling mechanism to move, so as to enable the anti-falling mechanism to extend to a bottom of the battery cell; controlling the grabbing apparatus to move to above an unloading position; controlling the anti-falling mechanism to move, so as to enable the anti-falling mechanism to retract to an original position; controlling the clamping plate mechanism to move, so as to unload the battery cell to the unloading position; and controlling the grabbing apparatus to move to a safe position to wait for a signal.

### BRIEF DESCRIPTION OF DRAWINGS

FIG. 1 is a schematic structural diagram of a grabbing apparatus according to an embodiment of this disclosure;
FIG. 2 is a schematic structural diagram from another angle of view of FIG. 1;
FIG. 3 is a schematic structural diagram of a rack, a distance varying assembly, and first base plates in FIG. 1;
FIG. 4 is a schematic structural diagram from another angle of view of FIG. 1, where a rack is not shown;
FIG. 5 is a schematic structural diagram of a distance varying assembly in FIG. 1;
FIG. 6 is a schematic structural diagram of a clamping assembly in FIG. 1, where the clamping assembly is located on a floatable clamping plate assembly;
FIG. 7 is a schematic structural diagram of a transmission assembly and a transmission guide plate in FIG. 6;
FIG. 8 is a schematic structural diagram of a reference clamping plate assembly in FIG. 1;
FIG. 9 is a schematic structural diagram of a floatable clamping plate assembly in FIG. 1;
FIG. 10 is a schematic structural diagram of an anti-falling mechanism in FIG. 1; and
FIG. 11 is a schematic flowchart of a control method according to an embodiment of this disclosure.

Description of reference signs:
grabbing apparatus 1; rack 11; connecting seat 111; mounting frame 112; clamping plate mechanism 12; floatable clamping plate assembly 121; third base plate 1211; mounting slide groove 12111; second back plate 1212; mounting slide plate 12121; floatable clamping plate kit 1213; floatable clamping plate 12131; floatable back plate 12132; connecting screw rod 12133; elastic member 12134; sleeve 12135; pull handle 1214; reference clamping plate assembly 122; second base plate 1221; first back plate 1222; mounting table 12221; first clamping plate 1223; mounting portion 12231; bearing portion 12232; distance varying mechanism 13; distance varying assembly 131; distance varying motor 1311; distance varying lead screw 1312; screw nut 1313; distance varying slide rail 1314; distance varying slider 1315; mounting plate 1316; mounting seat 1317; first base plate 132; clamping assembly 133; clamping drive assembly 1331; clamping cylinder 13311; transmission slide rail 13312; transmission slider 13313; transmission assembly 13314; transmission seat 133141; connecting portion 133141a; hoop groove 133141a1; fixing portion 133141b; transmission part 133142; vertical plate 1331421; transverse plate 1331422; transmission rod 1331423; mounting nut 1331424; transmission wheel 133143; transmission guide plate 13315; elongated hole 13315a; abutting part 13316; clamping slide rail 1332; clamping slider 1333; stroke limiting member 14; hydraulic buffer 141; rigid limiting member 142; position detection mechanism 15; first position sensor 151; loosening limit position sensor 1512; clamping limit position sensor 1511; sensor plate 152; battery cell sensor 16; anti-falling mechanism 17; bottom holding rod 171; transversely moving and lifting assembly 172; sliding seat 1721; first connector 17211; second connector 17212; third connector 17213; transversely moving slide rail 1722; transversely moving slider 1723; transversely moving cylinder 1724; mounting bracket 1724a; lifting cylinder 1725; second position sensor 1726; stop plate 1727; deviation correction apparatus 18; connecting arm 19; and battery cell 2.

### DESCRIPTION OF EMBODIMENTS

The following describes in detail embodiments of technical solutions of this disclosure with reference to the accompanying drawings. The following embodiments are merely intended for a clearer description of the technical solutions of this disclosure and therefore are used as just examples which do not constitute any limitations on the protection scope of this disclosure.

Unless otherwise defined, all technical and scientific terms used herein shall have the same meanings as commonly understood by those skilled in the art to which this disclosure relates. The terms used herein are intended to merely describe specific embodiments rather than to limit this disclosure. The terms "include/comprise", "have", and any other variations thereof in the specification and brief description of drawings of this disclosure are intended to cover non-exclusive inclusions.

At present, new energy batteries are used more and more widely in life and industries. New energy batteries are not only used in energy storage power supply systems such as hydroelectric power plants, thermal power plants, wind power plants, and solar power plants, but also widely used in electric transportation tools such as electric bicycles, electric motorcycles, and electric vehicles, and in fields such as aerospace. With continuous expansion of application fields of traction batteries, market demands for the traction batteries are also increasing.

In an embodiment of this disclosure, the battery may be a battery cell. The battery cell is a basic unit capable of realizing mutual conversion between chemical energy and electric energy, and can be used in manufacture of battery modules or battery packs, so as to supply power to electric apparatuses. The battery cell may be a secondary battery. The secondary battery is a battery cell whose active material can be activated for continuous use via charging after the battery cell is discharged. The battery cell may be a lithium-ion battery, a sodium-ion battery, a sodium-lithium-ion battery, a lithium metal battery, a sodium metal battery, a lithium-sulfur battery, a magnesium-ion battery, a nickel-metal hydride battery, a nickel-cadmium battery, a lead storage battery, or the like. This is not limited in the embodiments of this disclosure.

In the description of the embodiments of this disclosure, the technical terms "first", "second", "third", and the like are merely intended to distinguish between different objects, and shall not be understood as any indication or implication of relative importance or any implicit indication of the quantity, specific sequence, or primarysecondary relationship of the technical features indicated. In the description of embodiments of this disclosure, "multiple" means two or more, unless otherwise specifically defined.

In this specification, reference to "embodiment" means that specific features, structures or characteristics described with reference to the embodiment may be incorporated in at least one embodiment of this disclosure. The word "embodiment" appearing in various places in this specification does not necessarily refer to the same embodiment or an independent or alternative embodiment that is exclusive of other embodiments. Those skilled in the art explicitly and implicitly understand that the embodiments described herein may be combined with other embodiments.

In the description of the embodiments of this disclosure, the term "and/or" is only an associative relationship for describing associated objects, indicating that three relationships may be present. For example, A and/or B may indicate the following three cases: presence of only A, presence of both A and B, and presence of only B. In addition, a character "/" in this specification generally indicates an "or" relationship between contextually associated objects.

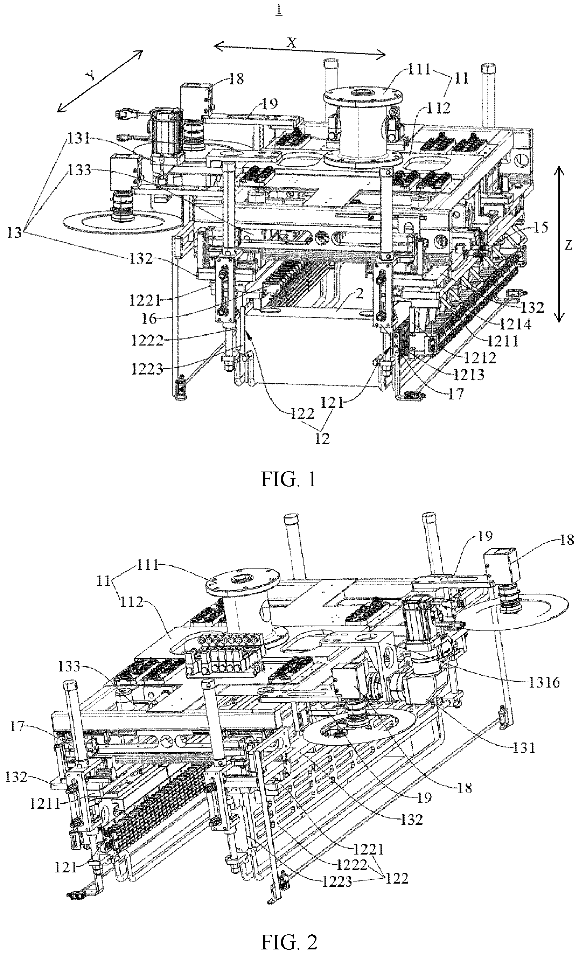

In the description of the embodiments of this disclosure, the orientations or positional relationships indicated by the technical terms "left-right direction", "front-back direction", "up-down direction", and the like are based on the orientations or positional relationships shown in FIG. 1; "two ends in the left-right direction" refers to a left end and a right end; and "two sides in the left-right direction" refers to a front end and a back end. These terms are merely for ease and brevity of description of the embodiments of this disclosure rather than indicating or implying that the apparatuses or components mentioned must have specific orientations or must be constructed, manipulated, or used according to specific orientations, and therefore shall not be construed as any limitation on the embodiments of this disclosure.

In the description of the embodiments of this disclosure, unless otherwise specified and defined explicitly, the technical terms "mount", "connect", "join", "fasten", and the like should be understood in their general senses. For example, they may refer to a fixed connection, a detachable connection, or an integral connection, may refer to a mechanical connection or an electrical connection, and may refer to a direct connection, an indirect connection via an intermediate medium, or an interaction between two elements. Those of ordinary skill in the art can understand specific meanings of these terms in embodiments of this disclosure as appropriate to specific situations.

In the description of the embodiments of this disclosure, unless otherwise specified and defined explicitly, the technical term "contact" should be understood in a broad sense, and may be direct contact, contact through an intermediate medium layer, contact between two that essentially exert none interaction force on each other, or contact between two that exert interaction forces on each other.

The battery cell is an energy storage component of a battery. The battery cell may be a secondary battery. The secondary battery is a battery cell whose active material can be activated for continuous use via charging after the battery cell is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-metal hydride battery, a nickel-cadmium battery, a lead storage battery, or the like.

The battery cell may be a cylindrical battery cell, a prismatic battery cell, or a battery cell of another shape. The prismatic battery cell includes a square-shell battery cell or a poly-prismatic battery cell. The poly-prismatic battery cell is, for example, a hexagonal battery cell or the like. This is not particularly limited in this disclosure.

In the related art, when battery cells are loaded in the form of a large package, grabbing stability of the battery cells cannot be ensured when they are grabbed by a grabbing apparatus.

In view of this, an embodiment of this disclosure provides a grabbing apparatus 1. Refer to FIG. 1 to FIG. 10. The grabbing apparatus 1 includes a rack 11, a clamping plate mechanism 12, and a distance varying mechanism 13. The clamping plate mechanism 12 is configured to connect to a manipulator. The clamping plate mechanism 12 includes two clamping plate assemblies spaced apart and is configured to clamp multiple battery cells 2. Only one battery cell 2 is shown schematically in FIG. 1. The distance varying mechanism 13 is arranged on the rack 11 and drivably connected to the two clamping plate assemblies to adjust a distance between the two clamping plate assemblies.

The two clamping plate assemblies are a reference clamping plate assembly 122 and a floatable clamping plate assembly 121. The reference clamping plate assembly 122 is capable of providing a clamping reference for the multiple battery cells 2. The floatable clamping plate assembly 121 is capable of clamping each battery cell 2 tightly.

In this embodiment of this disclosure, the rack 11 is configured as a component capable of providing support and mounting positions for the clamping plate mechanism 12 and the distance varying mechanism 13.

In this embodiment of this disclosure, the clamping plate mechanism 12 is configured as a component that is configured to clamp and release the battery cell 2.

In this embodiment of this disclosure, the distance varying mechanism 13 is configured to be capable of driving the two clamping plate assemblies to move, so as to adjust the distance between the two clamping plate assemblies.

This embodiment of this disclosure provides the grabbing apparatus 1. The rack 11 is provided and is connected to a mechanical arm of the manipulator, so that the rack 11 can be driven to move and/or rotate to complete a subsequent loading operation. The reference clamping plate assembly 122 and the floatable clamping plate assembly 121 are provided. During grabbing of the battery cell 2, the reference clamping plate assembly 122 can provide a clamping reference for the battery cell 2, so that shaking of the battery cell 2 is reduced, and clamping stability is improved. Then, in cooperation with the floatable clamping plate assembly 121, the multiple battery cells 2 can be flexibly clamped tightly, so that damage to the battery cells 2 is reduced.

The distance varying mechanism 13 is provided and is drivably connected to the floatable clamping plate assembly 121 and the reference clamping plate assembly 122, so that a distance between the floatable clamping plate assembly 121 and the battery cell 2 and a distance between the reference clamping plate assembly 122 and the battery cell 2 can be adjusted simultaneously by driving the distance varying mechanism 13, so as to grab or release the battery cell 2. In one aspect, balanced and stable forces can be applied on two sides of the battery cell 2, so as to reduce a risk that the battery cell 2 loses its balance or slips down. In another aspect, the floatable clamping plate assembly 121 and the reference clamping plate assembly 122 move simultaneously, so that a grabbing speed and a releasing speed of the battery cell 2 can be accelerated, and the efficiency is high. In still another aspect, the distance varying mechanism 13 adjusts a distance between the floatable clamping plate assembly 121 and the reference clamping plate assembly 122, so that battery cells 2 with different dimensions can be grabbed, and the battery cells 2 with different dimensions are infinitely compatible. Therefore, the adaptability and the universality are high.

It should be noted that the battery cells 2 with different dimensions are battery cells 2 with different outline dimensions. For example, the outline dimensions of the battery cells 2 being different may mean that three-dimensional dimensions of the battery cells 2 are different.

In some embodiments, refer to FIG. 1 to FIG. 3. The rack 11 includes a connecting seat 111 and a mounting frame 112. A shape of the mounting frame 112 is not limited. For example, the mounting frame 112 may be composed of multiple beams that roughly form a rectangular frame via enclosing. The connecting seat 111 is arranged above the mounting frame 112 and is configured to connect to the mechanical arm of the manipulator. The distance varying mechanism 13 may be arranged below the mounting frame 112.

In some embodiments, refer to FIG. 1, FIG. 2, and FIG. 4. The distance varying mechanism 13 includes a distance varying assembly 131, two first base plates 132, and a clamping assembly 133. The distance varying assembly 131 is arranged on the rack 11. The two first base plates 132 are spaced apart at two ends of the distance varying assembly 131 in a distance varying direction respectively. The distance varying assembly 131 is drivably connected to the two first base plates 132 to adjust a distance between the two first base plates 132. The clamping assembly 133 is arranged on the first base plate 132 and drivably connected to a corresponding clamping plate assembly to adjust the distance between the two clamping plate assemblies.

For example, the distance varying assembly 131 may be arranged below the mounting frame 112. The two first base plates 132 are spaced apart in the front-back direction. Either end of the distance varying assembly 131 in the front-back direction is drivably connected to one first base plate 132. Operation of the distance varying assembly 131 may drive the two first base plates 132 to move towards each other or away from each other in the front-back direction, so as to adjust the distance between the two first base plates 132. The clamping assembly 133 may be arranged on a side of the first base plate 132 close to the rack 11 and drivably connected to the corresponding clamping plate assembly. Operation of the clamping assembly 133 may adjust the distance between the two clamping plate assemblies, so as to realize clamping and releasing of the battery cell 2.

Therefore, during grabbing of a battery, first, the distance varying assembly 131 drives the two first base plates 132 to move towards each other, so as to drive the floatable clamping plate assembly 121 and the reference clamping plate assembly 122 to approach the battery cell 2 in the front-back direction; the distance varying assembly 131 stops after the floatable clamping plate assembly 121 and the reference clamping plate assembly 122 move to positions at a preset distance from the battery cell 2; and then, the clamping assembly 133 adjusts the distance between the two clamping plate assemblies, so as to ensure that the battery cell 2 is clamped tightly. In other words, the distance varying assembly 131 first moves the floatable clamping plate assembly 121 and the reference clamping plate assembly 122 to the positions at the preset distance from the battery cell 2; and then, the clamping assembly 133 adjusts the floatable clamping plate assembly 121 and the reference clamping plate assembly 122 to clamp the battery cell 2 tightly, so that clamping forces on battery cells 2 with different dimensions are consistent. In one aspect, arrangement of the preset distance means that the same clamping quality and safety can be obtained regardless of a dimension of a battery cell 2, so as to reduce damage to or unsafety of the battery cell 2 caused by insufficient clamping or too tight clamping. In another aspect, an operator does not need to adjust a clamping force of the clamping assembly 133 frequently, which helps simplify an operation process, improve operation efficiency and reduce a possibility of errors. In still another aspect, the distance varying assembly 131 and the clamping assembly 133 cooperate to clamp battery cells 2 tightly. When battery cells of the same model are clamped, the floatable clamping plate assembly 121 and the reference clamping plate assembly 122 may be moved to positions at the preset distance, and stay still. Subsequently, only the clamping assembly 133 needs to be adjusted. As the distance varying assembly 131 does not need to be adjusted frequently, maintenance costs of the distance varying assembly 131 can be reduced.

For example, the distance varying direction may be the front-back direction in FIG. 1; a transverse direction may be the front-back direction; and a vertical direction may be an up-down direction.

It should be noted that the front-back direction may be the X direction in FIG. 1, that the left-right direction may be the Y direction in FIG. 1, and that the up-down direction may be the Z direction in FIG. 1. An upward direction is a direction towards a ceiling. A downward direction is a direction opposite to the upward direction. The front-back direction, the left-right direction, and the up-down direction are perpendicular to each other, and jointly form a three-dimensional vertical coordinate system.

In some embodiments, refer to FIG. 1 to FIG. 5. The distance varying assembly 131 includes a distance varying motor 1311, a distance varying lead screw 1312, two screw nuts 1313, a distance varying slide rail 1314, and a distance varying slider 1315. The distance varying motor 1311 is arranged on the rack 11. The distance varying motor 1311 is drivably connected to the distance varying lead screw 1312. The two screw nuts 1313 are drivably connected to the distance varying lead screw 1312. Each screw nut 1313 is connected to a corresponding first base plate 132. The distance varying slide rail 1314 is arranged on the rack 11. The distance varying slider 1315 is provided on each first base plate 132 or the distance varying slider 1315 is provided on each screw nut 1313. The distance varying slider 1315 is capable of sliding on the distance varying slide rail 1314 in a fitted manner under the driving of the screw nut 1313.

For example, the distance varying assembly 131 includes a mounting plate 1316 and a mounting seat 1317. The mounting plate 1316 may be formed by bending an elongated plate. The mounting plate 1316 is roughly L-shaped. One end of the mounting plate 1316 is connected to the distance varying motor 1311. The other end of the mounting plate 1316 is fixed on the mounting frame 112 via welding or through a fastener, for example, a screw or a bolt. The mounting seat 1317 roughly takes the shape of a cuboid. The mounting seat 1317 and the mounting frame 112 are fixedly connected through a fastener. The mounting seat 1317 is below the mounting frame 112. The mounting seat 1317 and the first base plate 132 are spaced apart. A flange of the distance varying motor 1311 is fixed on a side of the mounting seat 1317 away from the battery cell 2. The distance varying motor 1311 is drivably connected to the distance varying lead screw 1312. The distance varying lead screw 1312 partially penetrates the mounting seat 1317 and extends in the front-back direction. Two screw nuts 1313 are provided. One screw nut 1313 is fixedly provided on each first base plate 132. The distance varying lead screw 1312 is drivably connected to the two screw nuts 1313. The distance varying slide rail 1314 is arranged on a bottom surface of the mounting frame 112. The distance varying slider 1315 may be arranged on the first base plate 132, or may be arranged on the screw nut 1313. The distance varying slider 1315 is in sliding fit with the distance varying slide rail 1314.

The distance varying motor 1311 operates to drive the distance varying lead screw 1312 to rotate in the screw nut 1313. Because the screw nut 1313 is fixed on the first base plate 132, the distance varying motor 1311 is fixed on the rack 11, and the first base plate 132 and the rack 11 are in sliding fit with each other through the distance varying slide rail 1314 and the distance varying slider 1315, rotation of the distance varying lead screw 1312 is transformed into respectively driving the first base plates 132 by the two screw nuts 1313 to move in the distance varying direction, so as to drive the floatable clamping plate assembly 121 and the reference clamping plate assembly 122 to move towards each other or away from each other to adjust distances between them and the battery cell 2.

The distance varying lead screw 1312 and the screw nut 1313 fit each other. In one aspect, the distance varying lead screw 1312 and the screw nut 1313 can well match each other via thread fit, so that a gap and friction are reduced, and high-precision movement of the floatable clamping plate assembly 121 and the reference clamping plate assembly 122 is realized. In another aspect, cooperation of the distance varying lead screw 1312 and the screw nut 1313 has a relatively high load capacity, so that a relatively large force and torque can be borne, and bearing capacity is great.

The distance varying lead screw 1312 is driven by the distance varying motor 1311, so that relatively high rotation precision can be realized, so as to ensure that movement precision of the floatable clamping plate assembly 121 and the reference clamping plate assembly 122 is relatively high, and ensure that the distance between the floatable clamping plate assembly 121 and the battery cell 2 and the distance between the reference clamping plate assembly 122 and the battery cell 2 can reach the preset distance.

The distance varying slide rail 1314 and the distance varying slider 1315 fit each other. In one aspect, the distance varying slide rail 1314 can provide a smooth and accurate motion path, and the distance varying slider 1315 can slide easily in the distance varying slide rail 1314, so that an entire moving process is more precise and controllable. In another aspect, the distance varying slide rail 1314 can provide extra support and stability, so that shaking or unstable sliding of the distance varying slider 1315 in the moving process is avoided, and motion stability is high.

For example, the distance varying motor 1311 may be a servo motor, and may further improve movement precision of the first base plate 132.

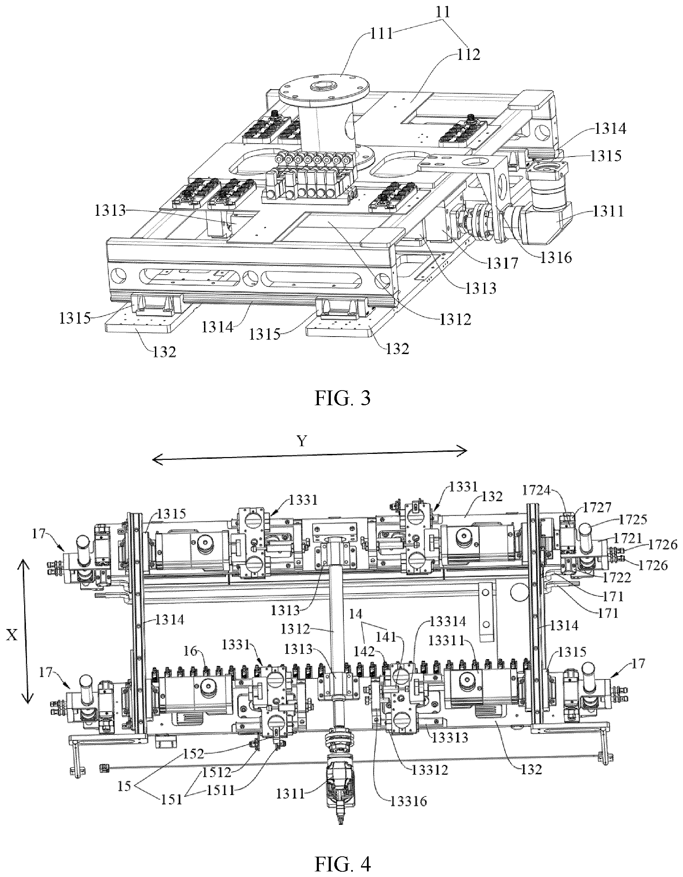

In some embodiments, refer to FIG. 3 and FIG. 4. Two distance varying slide rails 1314 are provided. The two distance varying slide rails 1314 are spaced apart on two sides of the rack 11 in the distance varying direction respectively. Each first base plate 132 is provided with two distance varying sliders 1315 spaced apart. Each distance varying slider 1315 is in sliding fit with a corresponding distance varying slide rail 1314.

For example, the two distance varying slide rails 1314 are spaced apart on two sides of the mounting frame 112 in the front-back direction; one distance varying slider 1315 is provided on each of two sides of each first base plate 132 in the front-back direction; and each distance varying slider 1315 is in sliding fit with a corresponding distance varying slide rail 1314.

The distance varying slide rails 1314 and the distance varying sliders 1315 are provided on both sides of the front-back direction. Therefore, in one aspect, vibration and shock can be reduced, so as to ensure that the first base plate 132 keeps balanced and stable in a moving process, and that motion smoothness is improved; and in another aspect, as the distance varying slide rails 1314 and the distance varying sliders 1315 are provided on both sides, load capacity can be further improved, and a greater force and torque can be borne.

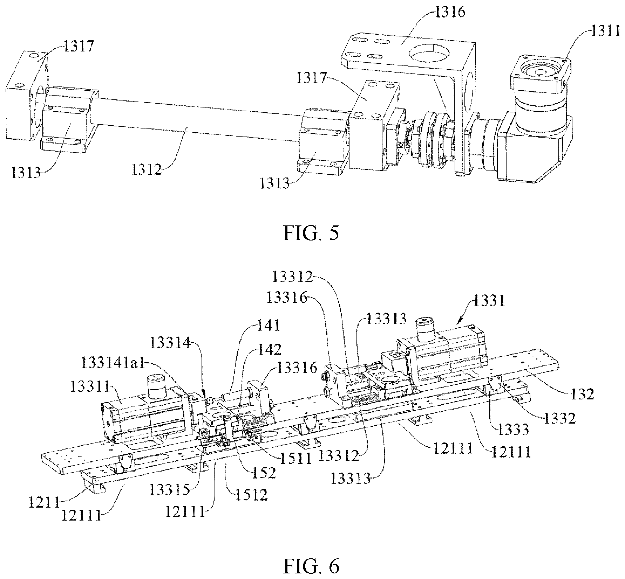

In some embodiments, refer to FIG. 4 and FIG. 6. The clamping assembly 133 includes a clamping drive assembly 1331, a clamping slide rail 1332, and a clamping slider 1333. The clamping drive assembly 1331 is arranged on the first base plate 132. The clamping slide rail 1332 is arranged on the first base plate 132. The clamping slider 1333 is connected to a corresponding clamping plate assembly. The clamping drive assembly 1331 is capable of driving the clamping slider 1333 to slide along the clamping slide rail 1332, so as to adjust the distance between the two clamping plate assemblies.

For example, the clamping drive assembly 1331 may be arranged above the first base plate 132; the clamping slide rail 1332 may be arranged below the first base plate 132; the clamping slider 1333 may be arranged above the clamping plate assembly; and both the clamping slide rail 1332 and the clamping slider 1333 extend in the front-back direction. Operation of the clamping drive assembly 1331 can drive the clamping slider 1333 to slide in the clamping slide rail 1332, so as to adjust the distance between the two clamping plate assemblies, and realize clamping and releasing of the battery cell 2.

After the distance varying assembly 131 adjusts the floatable clamping plate assembly 121 and the reference clamping plate assembly 122 to the positions at the preset distance from the battery cell 2, the clamping drive assembly 1331 may be enabled to drive the clamping slider 1333 to slide in the clamping slide rail 1332, so that the clamping plate assembly and the first base plate 132 move relatively. In this way, the floatable clamping plate assembly 121 and the reference clamping plate assembly 122 can tightly clamp or release the battery cell 2.

Due to arrangement of the clamping drive assembly 1331, movement precision of the clamping plate assembly can be improved, so that a clamping force on the battery cell 2 can be better controlled to reduce falling down, and a service life of the distance varying motor 1311 can be prolonged.

The clamping slide rail 1332 and the clamping slider 1333 fit each other. In one aspect, the clamping slide rail 1332 can provide a smooth and accurate motion path, and the clamping slider 1333 can slide easily in the clamping slide rail 1332, so that an entire moving process is more precise and controllable. In another aspect, the clamping slide rail 1332 can provide extra support and stability, so that shaking or unstable sliding of the clamping slider 1333 in the moving process is avoided, and motion stability is high.

In some embodiments, refer to FIG. 4 and FIG. 6. The clamping drive assembly 1331 includes a clamping cylinder 13311, a transmission slide rail 13312, a transmission slider 13313, a transmission assembly 13314, and a transmission guide plate 13315. The clamping cylinder 13311 is arranged on the first base plate 132. The transmission slide rail 13312 is arranged on the first base plate 132. The transmission slider 13313 is drivably connected to the clamping cylinder 13311. The transmission slider 13313 is capable of sliding on the transmission slide rail 13312 in a fitted manner under the driving of the clamping cylinder 13311. The transmission assembly 13314 is connected to the transmission slider 13313. The transmission guide plate 13315 is arranged on a corresponding clamping plate assembly. The transmission assembly 13314 is capable of moving with the transmission guide plate 13315 in a fitted manner, so as to cause the clamping slider 1333 to slide along the clamping slide rail 1332.

For example, the transmission guide plate 13315 may be fixedly arranged on the clamping plate assembly through a fastener; one end of the transmission assembly 13314 in the up-down direction is connected to the transmission slider 13313; and the other end of the transmission assembly 13314 in the up-down direction cooperates with the transmission guide plate 13315.

The clamping cylinder 13311 operates to drive the transmission slider 13313 to slide in the transmission slide rail 13312. Because the transmission slider 13313 is connected to the transmission assembly 13314, the transmission assembly 13314 is driven to move in the same direction. In addition, because the other end of the transmission assembly 13314 cooperates with the transmission guide plate 13315, and the transmission guide plate 13315 is fixedly arranged on the clamping plate assembly, cooperation between the transmission assembly 13314 and the transmission guide plate 13315 can drive the clamping plate assembly to move through the clamping slider 1333 and the clamping slide rail 1332, so as to tightly clamp or release the battery cell 2.

Herein, due to arrangement of the clamping cylinder 13311, in one aspect, the clamping cylinder 13311 has a relatively large clamping force and a self-locking function, so that a tightly clamped state can still be kept under the condition of shutdown to improve safety and reliability; and in another aspect, control of the clamping cylinder 13311 is relatively simple, and the control can be realized by using a solenoid valve, a PLC, or another device. For example, an occasion, a strength, and clamping time for clamping or releasing can be controlled precisely by adjusting an air supply control signal and an air discharge control signal of the clamping cylinder 13311.

The transmission slide rail 13312 and the transmission slider 13313 fit each other. In one aspect, the transmission slide rail 13312 can provide a smooth and accurate motion path, and the transmission slider 13313 can slide easily in the transmission slide rail 13312, so that an entire moving process is more precise and controllable. In another aspect, the transmission slide rail 13312 can provide extra support and stability, so that shaking or unstable sliding of the transmission slider 13313 in the moving process is avoided, and motion stability is high. Due to cooperation between the transmission assembly 13314 and the transmission guide plate 13315, the clamping cylinder 13311 can indirectly drive the clamping plate assembly to move, so that shock and vibration of the clamping plate assembly can be reduced, causing the clamping plate assembly to move more smoothly.

In some embodiments, refer to FIG. 4. Four clamping drive assemblies 1331 are provided, and each first base plate 132 is provided with two clamping drive assemblies 1331 spaced apart.

For example, either end of each first base plate 132 in the left-right direction is provided with one clamping drive assembly 1331. In this way, forces can be exerted on both ends of the clamping plate assembly in the left-right direction, so as to ensure that the clamping plate assembly moves more smoothly, and a clamping force exerted on the battery cell 2 is more uniform. In addition, as each base plate is provided with two clamping drive assemblies 1331, load capacity of the base plate can be further improved, and working capacity and reliability of the grabbing apparatus 1 can be improved.

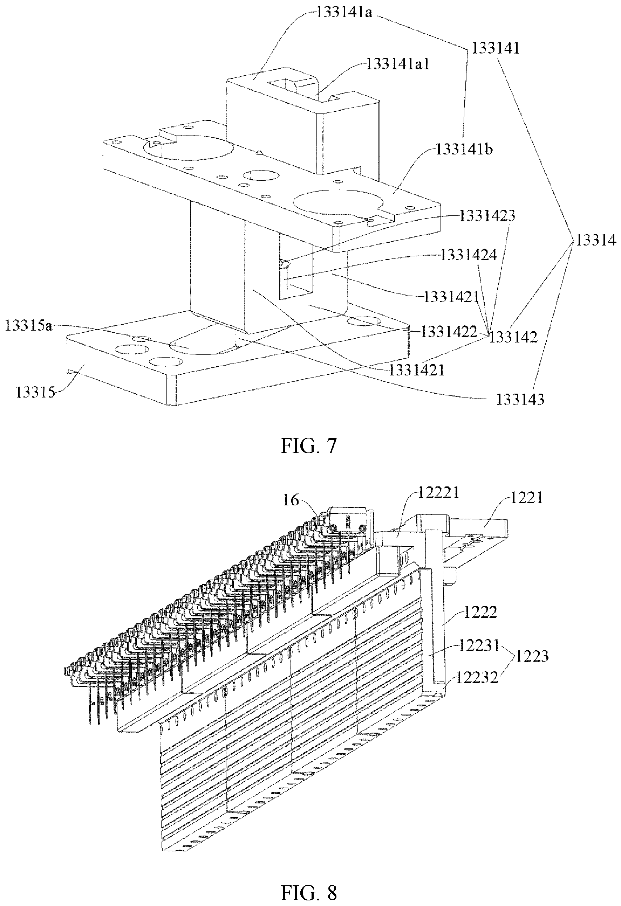

In some embodiments, refer to FIG. 6 and FIG. 7. An elongated hole 13315a is obliquely formed in the transmission guide plate 13315. The transmission assembly 13314 includes a transmission seat 133141, a transmission part 133142, and a transmission wheel 133143. The transmission seat 133141 is connected to the transmission slider 13313. The clamping cylinder 13311 is connected to the transmission seat 133141. The transmission part 133142 is connected to the transmission seat 133141. The transmission wheel 133143 is connected to the transmission part 133142. The transmission wheel 133143 is located in the elongated hole 13315a and is capable of moving in the elongated hole 13315a.

For example, the elongated hole 13315a may be a through hole penetrating the transmission guide plate 13315 in the up-down direction, or may be a blind hole. The transmission seat 133141 includes a connecting portion 133141a and a fixing portion 133141b. The connecting portion 133141a is connected to the fixing portion 133141b. The connecting portion 133141a forms a hoop groove 133141a1. A piston rod of the clamping cylinder 13311 is clamped in the hoop groove 133141a1. The fixing portion 133141b is fixed on the transmission slider 13313. One end of the transmission part 133142 is connected to the fixing portion 133141b. The other end of the transmission part 133142 is connected to the transmission wheel 133143. The transmission wheel 133143 is located in the elongated hole 13315a.

Clamping the battery cell 2 tightly is used as an example. The piston rod of the clamping cylinder 13311 extends out to push the connecting portion 133141a and drive the fixing portion 133141b, so that the transmission slider 13313 moves in the transmission slide rail 13312. In this case, the transmission part 133142 below the fixing portion 133141b drives the transmission wheel 133143 to move in an extension direction of the elongated hole 13315a, thereby driving the clamping plate assembly to move to clamp the battery cell 2 tightly.

The oblique elongated hole 13315a is formed in the transmission guide plate 13315; the transmission guide plate 13315 is fixedly arranged on the clamping plate assembly; and the clamping plate assembly and the first base plate 132 above the clamping plate assembly are in sliding fit with each other through the clamping slide rail 1332 and the clamping slider 1333. In this case, when the transmission wheel 133143 moves in the elongated hole 13315a, because the extension direction of the elongated hole 13315a is oblique to an extending direction of the clamping cylinder 13311, the clamping plate assembly moves in the oblique direction to tightly clamp or release the battery cell 2. Due to arrangement of the transmission seat 133141, the transmission part 133142, the transmission wheel 133143, and the oblique elongated hole 13315a, a movement direction of the clamping cylinder 13311 can be changed to a direction in which the clamping plate assembly is pushed towards or away from the battery cell 2. Therefore, layouts of the clamping cylinder 13311 and the like can be changed, and a dimension of the grabbing apparatus 1 can be reduced.

In some embodiments, refer to FIG. 6. Two transmission slide rails 13312 and two transmission sliders 13313 are provided. The two transmission slide rails 13312 are spaced apart on the first base plate 132. An extension direction of the transmission slide rail 13312 is perpendicular to an extension direction of the clamping slide rail 1332. The two transmission sliders 13313 are spaced apart on the transmission seat 133141. Each transmission slider 13313 is in sliding fit with a corresponding transmission slide rail 13312.

For example, the extension direction of the elongated hole 13315a may be oblique backwards in a direction perpendicular to the up-down direction, or may be oblique forwards in a direction perpendicular to the up-down direction; the two transmission slide rails 13312 are arranged on the first base plate 132 in the front-back direction; either end of the fixing portion 133141b in the front-back direction is provided with one transmission slider 13313; and each transmission slider 13313 is in transmission fit with a corresponding transmission slide rail 13312.

Due to arrangement of the two transmission slide rails 13312 and the two transmission sliders 13313, in one aspect, vibration and shock can be reduced, so as to ensure that the transmission assembly 13314 keeps balanced and stable in a moving process, and that motion smoothness is improved; and in another aspect, load capacity can be further improved, and a greater force and torque can be borne.

Due to the transmission assembly 13314 and the oblique elongated hole 13315a of the transmission guide plate 13315, the extension direction of the transmission slide rail 13312 can be perpendicular to the extension direction of the clamping slide rail 1332, which means that the clamping cylinder 13311 can be arranged in the left-right direction. Therefore, a dimension of the grabbing apparatus 1 in the front-back direction can be reduced, and a structure is more compact.

In some embodiments, refer to FIG. 7. The transmission part 133142 includes two vertical plates 1331421 spaced apart, a transverse plate 1331422 connected between the two vertical plates 1331421, a transmission rod 1331423, and a mounting nut 1331424. The transmission wheel 133143 is mounted at one end of the transmission rod 1331423. The other end of the transmission rod 1331423 penetrates the transverse plate 1331422 and is located between the two vertical plates 1331421. The mounting nut 1331424 fastens the transmission rod 1331423 onto the transverse plate 1331422.

For example, the two vertical plates 1331421 are spaced apart in the left-right direction; the transverse plate 1331422 is connected between the two vertical plates 1331421; the transmission wheel 133143 is mounted on a portion, penetrating the transverse plate 1331422 downwards, of the transmission rod 1331423; the mounting nut 1331424 is provided on a portion, above the transverse plate 1331422, of the transmission rod 1331423; and the transmission rod 1331423 is fixed on the transverse plate 1331422 through the mounting nut 1331424.

Due to the two vertical plates 1331421 spaced apart in the left-right direction and the transverse plate 1331422 connected between the two vertical plates 1331421, in one aspect, the transmission rod 1331423 can be protected in the left-right direction to prolong a service life of the transmission rod 1331423; and in another aspect, the two vertical plates 1331421 and the transverse plate 1331422 can improve structural strength of the transmission rod 1331423 in the left-right direction, so that the transmission rod 1331423 can bear a heavier load.

In some embodiments, the transmission wheel 133143 can rotate around its axis to reduce friction with a wall of the elongated hole 13315a.

In some embodiments, refer to FIG. 4 and FIG. 6. The grabbing apparatus 1 further includes multiple stroke limiting members 14, each configured to limit a stroke of a corresponding clamping cylinder 13311.

For example, the clamping drive assembly 1331 includes an abutting part 13316; the abutting part 13316 is arranged on a side of the transmission slide rail 13312 away from the clamping cylinder 13311 in the left-right direction; the abutting part 13316 extends in the up-down direction; each clamping cylinder 13311 is provided with one corresponding stroke limiting member 14; the stroke limiting member 14 extends in the left-right direction; and a portion of the stroke limiting member 14 penetrates the abutting part 13316 and is located on a side of the transmission assembly 13314 away from the clamping cylinder 13311 in the left-right direction.

When the piston rod of the clamping cylinder 13311 extends out to drive the transmission assembly 13314 to move, the stroke limiting member 14 may stop the transmission assembly 13314, so as to avoid an over-large clamping force on the battery cell 2 caused by excessive movement of the transmission assembly 13314. Therefore, safety is high.

It should be noted that limiting the stroke of the clamping cylinder 13311 means limiting an extended length of the piston rod of the clamping cylinder 13311 via blocking and abutting.

In some embodiments, refer to FIG. 4 and FIG. 6. The stroke limiting member 14 includes a hydraulic buffer 141 and/or a rigid limiting member 142. For example, the stroke limiting member 14 includes the rigid limiting member 142; and a portion of the rigid limiting member 142 penetrates the abutting part 13316 and is located on a side of the transmission part 133142 away from the clamping cylinder 13311 in the left-right direction. In this case, an over-large clamping force on the battery cell 2 caused by excessive movement of the transmission part 133142 can be avoided. Therefore, safety is high.

In some embodiments, the stroke limiting member 14 includes a hydraulic limiting member; and a portion of the hydraulic limiting member penetrates the abutting part 13316 and is located on a side of the connecting portion 133141a away from the clamping cylinder 13311 in the left-right direction. In this case, an over-large clamping force on the battery cell 2 caused by excessive movement of the connecting portion 133141a can be avoided. Therefore, safety is high.

In some other embodiments, the stroke limiting member 14 includes the hydraulic buffer 141 and the rigid limiting member 142; the hydraulic limiting member is located above the rigid limiting member 142; a portion of the hydraulic limiting member penetrates the abutting part 13316 and is located on a side of the connecting portion 133141a away from the clamping cylinder 13311 in the left-right direction; and a portion of the rigid limiting member 142 penetrates the abutting part 13316 and is located on a side of the transmission part 133142 away from the clamping cylinder 13311 in the left-right direction. Therefore, safety is high.

In some embodiments, refer to FIG. 4 and FIG. 6. The grabbing apparatus 1 further includes multiple position detection mechanisms 15, each configured to detect a position of a corresponding transmission slider 13313.

For example, a quantity of the position detection mechanisms 15 is not limited. For example, the quantity of the position detection mechanisms 15 is 4. Each of the four position detection mechanisms 15 is arranged at a corresponding transmission slider 13313, and is configured to detect a movement amount of the transmission slider 13313, so as to ensure safety detection for clamping of the battery cell 2. Therefore, safety is high.

In some embodiments, refer to FIG. 4 and FIG. 6. The position detection mechanism 15 includes multiple first position sensors 151 and a sensor plate 152. The multiple first position sensors 151 are spaced apart on the first base plate 132 and configured to detect a position of the transmission slider 13313. The sensor plate 152 is arranged on the transmission assembly 13314 or the transmission slider 13313 and configured to sense the first position sensor 151.

For example, the sensor plate 152 may be arranged on the transmission seat 133141, or may be arranged on the transmission slider 13313. Each transmission slider 13313 is provided with two first position sensors 151. The two first position sensors 151 are spaced apart in the left-right direction on a side surface of the first base plate 132 away from the battery cell 2 in the front-back direction. Each first position sensor 151 is provided with a sensing groove. A movement amount of the transmission slider 13313 can be determined when the sensor plate 152 moves into the sensing groove along with the transmission slider 13313. Then, a clamping force on the battery cell 2 can be determined. Therefore, an over-large clamping force on the battery cell 2 caused by excessive movement is avoided, and safety is high.

In some embodiments, refer to FIG. 4 and FIG. 6. The first position sensors 151 are a loosening limit position sensor 1512 and a clamping limit position sensor 1511. The loosening limit position sensor 1512 is configured to detect a maximum limit position of the transmission slider 13313. The clamping limit position sensor 1511 is configured to detect a minimum limit position of the transmission slider 13313.

For example, the first position sensor 151 close to the clamping cylinder 13311 is the loosening limit position sensor 1512; and the first position sensor 151 away from the clamping cylinder 13311 is the clamping limit position sensor 1511. When the sensor plate 152 is located in a sensing groove of the clamping limit position sensor 1511, it indicates that the battery cell 2 in this case has been clamped tightly by the two clamping plate assemblies. When the sensor plate 152 is located in a sensing groove of the loosening limit position sensor 1512, it indicates that the battery cell 2 in this case is at the preset distance from the two clamping plate assemblies.

In this case, the clamping limit position sensor 1511 and the loosening limit position sensor 1512 may be configured to determine whether the clamping plate assembly is in a clamped state in which the battery cell 2 is clamped tightly, or in a loosed state in which the battery cell 2 is kept at the preset distance. Therefore, clamping detection for the battery cell 2 is realized, so as to avoid a phenomenon that the battery cell 2 is not clamped tightly and falls down.

In some embodiments, refer to FIG. 2 and FIG. 8. The reference clamping plate assembly 122 includes a second base plate 1221, a first back plate 1222, and multiple first clamping plates 1223. The second base plate 1221 is drivably connected to the distance varying mechanism 13. The first back plate 1222 is connected to the second base plate 1221. The multiple first clamping plates 1223 are mounted on the first back plate 1222 side by side, fixed relative to the first back plate 1222, and configured to clamp the battery cell 2.

For example, a clamping slider 1333 and a transmission guide plate 13315 that are close to the distance varying motor 1311 in the front-back direction are both arranged on the second base plate 1221; the second base plate 1221 extends in the left-right direction; the second base plate 1221 is slidably connected to the first base plate 132 through the clamping slider 1333 and the clamping slide rail 1332; and the second base plate 1221 is drivably connected to the clamping cylinder 13311 through the transmission guide plate 13315 and the transmission assembly 13314. The first back plate 1222 is connected below the second base plate 1221 through a fastener. The first back plate 1222 extends in the left-right direction. A quantity of the first clamping plates 1223 is not limited. For example, the quantity of the first clamping plates 1223 is 4. The four first clamping plates 1223 are fixedly arranged in the left-right direction on a side of the first back plate 1222 close to the battery cell 2 in the front-back direction, and are configured to clamp the battery cell 2 by cooperating with the floatable clamping plate assembly 121.

In this case, because the first clamping plate 1223 is fixed relative to the first back plate 1222, the battery cell 2 can be supported rigidly to reduce phenomena that the battery cell 2 shakes.

For example, in some embodiments, refer to FIG. 8. The reference clamping plate assembly 122 includes a fixing bolt and a mounting bolt. The first clamping plate 1223 includes a mounting portion 12231 and a bearing portion 12232. The mounting portion 12231 is connected above the bearing portion 12232, so that the first clamping plate 1223 is roughly L-shaped. A lower surface of the first back plate 1222 is abutted onto the bearing portion 12232. A side surface of the first back plate 1222 close to the battery cell 2 in the front-back direction is fitted with the mounting portion 12231. The fixing bolt is fixed on the first back plate 1222 after penetrating the mounting portion 12231 in the front-back direction. The mounting bolt is fixed on the first back plate 1222 after penetrating the bearing portion 12232 in the up-down direction. In this case, strength of connection between the first clamping plate 1223 and the first back plate 1222 can be improved to enhance clamping stability.

In some embodiments, the first clamping plate 1223 includes youli glue. In one aspect, youli glue has good elasticity and flexibility, and can effectively absorb and disperse impact and vibration, so as to reduce collision with the battery cell 2 and reduce influence on the grabbing apparatus 1. In another aspect, youli glue can be used as a protective layer to avoid direct contact between the first clamping plate 1223 and the battery cell 2, so that damage, abrasion, and scratches to the battery cell 2 can be reduced. In still another aspect, youli glue can fill an irregular gap between the first clamping plate and the battery cell 2 and an uneven position on a surface, so as to provide better adaptability and tight connection. Therefore, the battery cell 2 is clamped more stably.

In some embodiments, refer to FIG. 1, FIG. 4, and FIG. 8. The grabbing apparatus 1 further includes multiple battery cell sensors 16. The multiple battery cell sensors 16 are spaced apart on the first back plate 1222 and configured to detect the battery cell 2.

For example, a mounting table 12221 is formed on an upper portion of a side of the first back plate 1222 close to the battery cell 2; and the mounting table 12221 extends in the left-right direction. A quantity of the battery cell sensors 16 is not limited. For example, the quantity of the battery cell sensors 16 may be 32; and the 32 battery cell sensors 16 are spaced apart on the mounting table 12221 in the left-right direction. The battery cell sensor 16 may be a diffusely reflecting photoelectric sensor and is configured to detect the battery cell 2 located below the sensor.

The multiple battery cell sensors 16 are provided to detect sizes, dimensions, positions, and other information of the multiple battery cells 2 below the battery cell sensors, so that the battery cells 2 can be grabbed stably.

In some embodiments, multiple weight-reducing holes are formed in a side of the first back plate 1222 away from the battery cell 2, so as to reduce weight of the first back plate 1222.

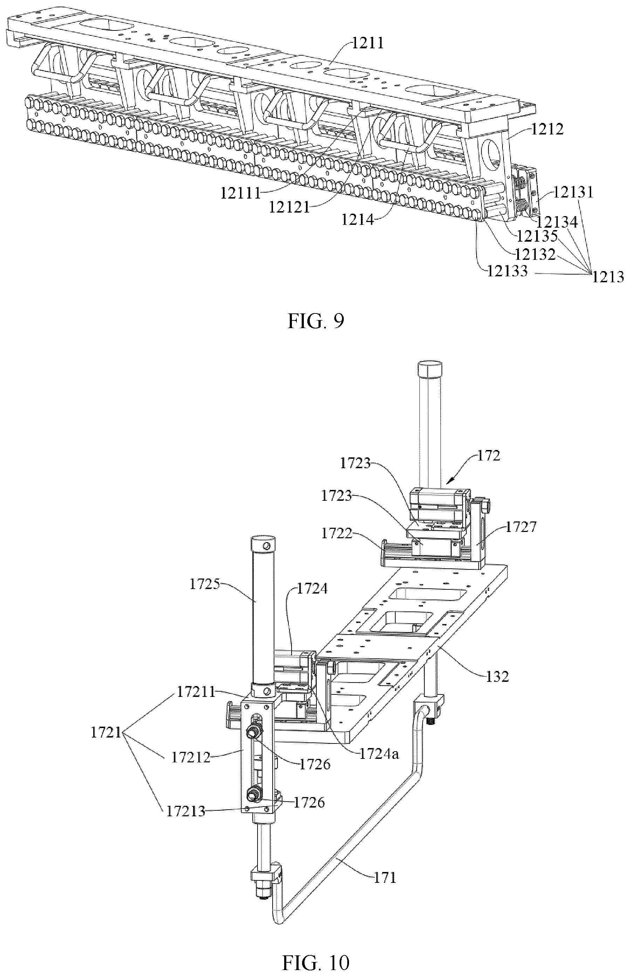

In some embodiments, refer to FIG. 1 and FIG. 9. The floatable clamping plate assembly 121 includes a third base plate 1211, a second back plate 1212, and multiple floatable clamping plate kits 1213. The third base plate 1211 is drivably connected to the distance varying mechanism 13. The second back plate 1212 is connected to the third base plate 1211. The multiple floatable clamping plate kits 1213 are mounted on the second back plate 1212 side by side, capable of moving in the distance varying direction relative to the second back plate 1212, and configured to clamp the battery cell 2.

For example, a transmission guide plate 13315 and a transmission slider 13313 that are away from the distance varying motor 1311 in the front-back direction are arranged on the third base plate 1211; the third base plate 1211 extends in the left-right direction; the third base plate 1211 is drivably connected to the clamping cylinder 13311 through the transmission guide plate 13315 and the transmission assembly 13314; and the third base plate 1211 is slidably connected to the first base plate 132 through the clamping slider 1333 and the clamping slide rail 1332. The second back plate 1212 is below the third base plate 1211. The second back plate 1212 extends in the left-right direction. The multiple floatable clamping plate kits 1213 are fixedly arranged on the second back plate 1212 in the left-right direction, and configured to clamp the battery cell 2 by moving in the distance varying direction relative to the second back plate 1212.

The distance varying mechanism 13 operates to drive the third base plate 1211, so as to drive the second back plate 1212 and the multiple floatable clamping plate kits 1213 to move in the distance varying direction. After the floatable clamping plate kits 1213 are in contact with the battery cells 2, the floatable clamping plate kits 1213 can move in the distance varying direction relative to the second back plate 1212, so that batteries are further clamped tightly, and a clamping effect is good.

In some embodiments, refer to FIG. 9. The floatable clamping plate kit 1213 includes a floatable clamping plate 12131, a floatable back plate 12132, a connecting screw rod 12133, an elastic member 12134, and a sleeve 12135. The floatable clamping plate 12131 is configured to clamp the battery cell 2. The floatable back plate 12132 and the floatable clamping plate 12131 are respectively located on two sides of the second back plate 1212. The connecting screw rod 12133 penetrates the floatable back plate 12132 and is connected to the floatable clamping plate 12131. The elastic member 12134 is located between the floatable clamping plate 12131 and the second back plate 1212. The sleeve 12135 is located between the floatable back plate 12132 and the second back plate 1212.

For example, the floatable clamping plate 12131 is located on a side of the second back plate 1212 close to the battery cell 2 in the front-back direction, and is configured to clamp the battery cell 2; and the floatable back plate 12132 is located on a side of the second back plate 1212 away from the battery cell 2 in the front-back direction. The connecting screw rod 12133 penetrates the floatable back plate 12132 and the second back plate 1212 and is fixedly connected to the floatable clamping plate 12131. The connecting screw rod 12133 can move relative to the second back plate 1212 and the floatable clamping plate 12131. The elastic member 12134 is located between the floatable clamping plate 12131 and the second back plate 1212. The sleeve 12135 sleeves a portion of the connecting screw rod 12133 between the floatable back plate 12132 and the second back plate 1212.

As the elastic member 12134 is arranged between the floatable clamping plate 12131 and the second back plate 1212, the clamping cylinder 13311 operates after the distance varying motor 1311 pushes the two clamping plate assemblies to the positions at the preset distance from the battery cell 2. When the clamping cylinder 13311 pushes the floatable clamping plate assembly 121 to approach the battery cell 2 in the front-back direction, the floatable clamping plate 12131 is in contact with the battery cell 2 first, and the floatable clamping plate kits 1213 continue moving. In this case, the floatable clamping plate 12131 cannot continue moving due to blocking of the battery cell 2; and the connecting screw rod 12133 is movable relative to the second back plate 1212 and the floatable back plate 12132. Therefore, the second back plate 1212 can continue moving, so as to compress the elastic member 12134 between the second back plate 1212 and the floatable clamping plate 12131. The elastic member 12134 stores elastic potential energy when being compressed. The clamping cylinder 13311 stops when the sensor plate 152 is located in the sensing groove of the clamping limit position sensor 1511. In this case, deformation of the elastic member 12134 restores in the front-back direction. Being stopped by the second back plate 1212 behind the elastic member, the elastic potential energy stored by the elastic member 12134 is converted into kinetic energy, so as to provide a force for the floatable clamping plate 12131, by which the floatable clamping plate 12131 approaches the battery cell 2 in the front-back direction. In this case, the battery cell 2 can be tightly clamped between the first clamping plate 1223 and the floatable clamping plate 12131 flexibly under the action of the elastic member 12134.

As a portion of the connecting screw rod 12133 between the second back plate 1212 and the floatable back plate 12132 is sleeved with the sleeve 12135, a specific pre-tightening force on the elastic member 12134 between the second back plate 1212 and the floatable clamping plate 12131 can be maintained to reduce phenomena that the floatable clamping plate 12131 shakes when the battery cell 2 is not clamped tightly. Therefore, stability is high.

In some embodiments, the floatable clamping plate 12131 includes youli glue. In one aspect, youli glue has good elasticity and flexibility, and can effectively absorb and disperse impact and vibration, so as to reduce collision or vibration with the battery cell 2 and reduce influence on the grabbing apparatus 1. In another aspect, youli glue can be used as a protective layer to avoid direct contact between the floatable clamping plate 12131 and the battery cell 2, so that damage, abrasion, and scratches to the battery cell 2 can be reduced. In still another aspect, youli glue can fill an irregular gap between the first clamping plate and the battery cell 2 and an uneven position on a surface, so as to provide better adaptability and tight connection. Therefore, the battery cell 2 is clamped more stably.

In some embodiments, refer to FIG. 9. A quantity of the elastic members 12134 and a quantity of the connecting screw rods 12133 are both 2. The two connecting screw rods 12133 are spaced apart in the up-down direction. The two elastic members 12134 are spaced apart between the second back plate 1212 and the floatable clamping plate 12131 in the up-down direction. In this case, clamping stability of the floatable clamping plate 12131 can be enhanced to reduce shakes.

In some embodiments, multiple second back plates 1212 are provided; the multiple second back plates 1212 are arranged side by side on the third base plate 1211; and multiple floatable clamping plate kits 1213 are provided on each second back plate 1212.

For example, four second back plates 1212 are provided; the four second back plates 1212 are arranged on the third base plate 1211 in the left-right direction; 12 floatable clamping plate kits 1213 may be provided on each second back plate 1212; and the 12 floatable clamping plate kits 1213 are spaced apart in the left-right direction.

In this case, as the multiple floatable clamping plate kits 1213 and the second back plates 1212 are arranged in the left-right direction, multiple battery cells 2 can be grabbed and clamped simultaneously. Therefore, efficiency is high.

In some embodiments, refer to FIG. 6 and FIG. 9. Multiple mounting slide grooves 12111 are formed in the third base plate 1211 side by side. A mounting slide plate 12121 is provided on the second back plate 1212. The mounting slide plate 12121 is arranged in the mounting slide groove 12111. The mounting slide plate 12121 is tightly connected to the third base plate 1211.

For example, the mounting slide plate 12121 may be arranged on an upper surface of the second back plate 1212, and be projected in the left-right direction; and the mounting slide plate 12121 and the second back plate 1212 are designed to be roughly T-shaped. A quantity of the mounting slide grooves 12111 is not limited. For example, the quantity of the mounting slide grooves 12111 may be 4. The four mounting slide grooves 12111 are spaced apart on a lower surface of the third base plate 1211 in the left-right direction. The mounting slide groove 12111 extends in the front-back direction. One second back plate 1212 is correspondingly provided for each mounting slide groove 12111. The mounting slide plate 12121 is slidably arranged in the mounting slide groove 12111.

The second back plate 1212 and the third base plate 1211 can move in the front-back direction via a sliding fit between the mounting slide plate 12121 and the mounting slide groove 12111. In one aspect, when the floatable clamping plate kit 1213, the second back plate 1212, or both need to be overhauled or replaced, the second back plate 1212 can be pulled out in the front-back direction away from the battery cell 2 through the mounting slide plate 12121 and the mounting slide groove 12111. After being replaced or repaired completely, the second back plate 1212 can be pushed in the front-back direction towards the battery cell 2 through the mounting slide plate 12121 and the mounting slide groove 12111. Therefore, a mounting speed and a demounting speed are high. In another aspect, the mounting slide groove 12111 can provide a smooth and accurate motion path, and the mounting slide plate 12121 can slide easily in the mounting slide groove 12111, so that an entire moving process is more precise and controllable. In still another aspect, the mounting slide groove 12111 can provide extra support and stability, so that shaking or unstable sliding of the mounting slide plate 12121 in the moving process is avoided.

In some embodiments, after the mounting slide plate 12121 slides into the mounting slide groove 12111, the third base plate 1211 and the mounting slide plate 12121 may be fixed through a fastener, so as to avoid a phenomenon that the mounting slide plate 12121 is detached from the mounting slide groove 12111 when the grabbing apparatus 1 moves.

In some embodiments, refer to FIG. 9. The floatable clamping plate assembly 121 further includes a pull handle 1214; and the pull handle 1214 is arranged on the second back plate 1212.

For example, a shape of the pull handle 1214 is not limited. For example, the shape of the pull handle 1214 is roughly U-shaped and two ends of the pull handle 1214 are connected below the mounting slide plate 12121. In this case, when the floatable clamping plate kit 1213 needs to be repaired and replaced, the pull handle 1214 can provide a stable support point for an operator, so that replace efficiency and repair efficiency are improved.

In some embodiments, refer to FIG. 6 and FIG. 9. Multiple mounting slide grooves 12111 are formed in the third base plate 1211 side by side. A mounting slide plate 12121 is provided on the second back plate 1212. The mounting slide plate 12121 is arranged in the mounting slide groove 12111. The mounting slide plate 12121 is tightly connected to the third base plate 1211. The floatable clamping plate assembly 121 further includes a pull handle 1214; and the pull handle 1214 is arranged on the second back plate 1212.

In this case, due to arrangement of the mounting slide plate 12121 and the mounting slide groove 12111, an operator can pull out and push in the second back plate 1212 more conveniently by pulling or pushing the pull handle 1214, so as to further improve efficiency of maintenance and replacement.

In some embodiments, the floatable clamping plates 12131 are configured in such a manner that each battery cell 2 is clamped by at least two floatable clamping plates 12131.

For example, a dimension of the battery cell 2 in the left-right direction is approximately 25 mm to 100 mm; and a dimension of the floatable clamping plate 12131 in the left-right direction is approximately 20 mm. When a battery is 25 mm, it may be clamped by two floatable clamping plates 12131; and when a dimension of the battery cell 2 is 45 mm, the battery cell may be clamped by three floatable clamping plates 12131. Each battery cell 2 corresponds to a different floatable clamping plate 12131. In other words, a case that one floatable clamping plate 12131 clamps two battery cells 2 does not exist. In this case, unstable clamping of the battery cell 2 can be avoided.

In some embodiments, refer to FIG. 1, FIG. 2, and FIG. 10. The grabbing apparatus 1 further includes an anti-falling mechanism 17. The anti-falling mechanism 17 is arranged on the distance varying mechanism 13 and provided with a transverse first position, a transverse second position, a vertical third position, and a vertical fourth position.

When the anti-falling mechanism 17 is located at the transverse first position and the vertical fourth position, the anti-falling mechanism is configured to prevent a mounting bolt of the clamping plate assembly from falling down.

When the anti-falling mechanism 17 is located at the transverse first position and the vertical third position, the anti-falling mechanism is configured to press foam for the battery cell 2 during grabbing of the battery cell 2.

When the anti-falling mechanism 17 is located at the transverse second position and the vertical fourth position, the anti-falling mechanism is configured to prevent the battery cell 2 from falling down.

For example, the anti-falling mechanism 17 may be arranged on the first base plate 132; the first position is located on a side of the second position away from the battery cell 2 in the front-back direction; and the third position is located on a side of the fourth position away from the rack 11 in the up-down direction.

Therefore, when the grabbing apparatus 1 is in an initial state, the anti-falling mechanism 17 thereon is located at the transverse first position and the vertical fourth position. In this case, the anti-falling mechanism 17 can press upwards the mounting bolt under the bearing portion 12232, so that shaking of the first clamping plate 1223 caused by falling down of the mounting bolt can be avoided. When the grabbing apparatus 1 grabs the battery cell 2, the anti-falling mechanism 17 thereon is located at the transverse first position and the vertical third position. In this case, the anti-falling mechanism 17 can press downwards foam accommodating the battery cell 2, so that lifting of the foam during grabbing of the battery cell 2 can be avoided. When the grabbing mechanism grabs the battery cell 2 for loading, the anti-falling mechanism 17 thereon is located at the transverse second position and the vertical fourth position. In this case, bottom holding support can be provided for the bottom of the battery cell 2, so that falling down of the battery cell 2 is avoided.

In some embodiments, refer to FIG. 4 and FIG. 10. The anti-falling mechanism 17 includes a bottom holding rod 171 and two transversely moving and lifting assemblies 172. The two transversely moving and lifting assemblies 172 are respectively arranged at two ends of the distance varying mechanism 13. Each transversely moving and lifting assembly 172 is connected to one end of the bottom holding rod 171.

For example, the two transversely moving and lifting assemblies 172 are respectively arranged at two ends of the first base plate 132 in the left-right direction; and the two transversely moving and lifting assemblies 172 are arranged at two ends of the bottom holding rod 171 in the left-right direction. In this case, bottom holding support can be provided for the battery cell 2 in the left-right direction, so that safety is high.

For example, two bottom holding rods 171 are provided; the two bottom holding rods 171 are spaced apart in the front-back direction; and two transversely moving and lifting assemblies 172 are correspondingly provided for each bottom holding rod 171. In this case, a bottom holding area can be enlarged, so as to improve support stability for the battery cell 2. Therefore, safety is high.

Refer to FIG. 10. The transversely moving and lifting assembly 172 includes a sliding seat 1721, a transversely moving slide rail 1722, a transversely moving slider 1723, a transversely moving cylinder 1724, a lifting cylinder 1725, and two second position sensors 1726. The transversely moving slide rail 1722 is arranged on the distance varying mechanism 13. The transversely moving slider 1723 is arranged on the sliding seat 1721. The transversely moving cylinder 1724 is arranged on the transversely moving slider 1723 and drivably connected to the transversely moving slide rail 1722, so that the transversely moving slider 1723 is capable of sliding on the transversely moving slide rail 1722 in a fitted manner. The lifting cylinder 1725 is arranged on the sliding seat 1721. The lifting cylinder 1725 is drivably connected to the bottom holding rod 171 and is capable of causing the bottom holding rod 171 to move up and down. The two second position sensors 1726 are arranged on the sliding seat 1721 and configured to detect the lowest position and the highest position of the bottom holding rod 171 respectively.

For example, the sliding seat 1721 includes a first connector 17211, a second connector 17212, and a third connector 17213. Both the first connector 17211 and the third connector 17213 extend in the left-right direction. The second connector 17212 is connected to the first connector 17211 and the third connector 17213 in the up-down direction, so that the sliding seat 1721 is roughly U-shaped. The transversely moving slide rail 1722 may be arranged on the first base plate 132. The transversely moving slide rail 1722 extends in the front-back direction. The transversely moving and lifting assembly 172 includes a stop plate 1727. The stop plate 1727 is arranged on a side of the transversely moving slide rail 1722 away from the battery cell 2 in the front-back direction. An upper portion of the transversely moving slider 1723 is fixedly connected to a lower portion of the first connector 17211. A lower portion of the transversely moving slider 1723 is in sliding fit with the transversely moving slide rail 1722. A stop part is configured to stop the transversely moving slider 1723, so as to avoid a case of derailing caused by excessive movement. The mounting bracket 1724a of the transversely moving cylinder 1724 is fixedly arranged on the first connector 17211. A piston rod of the transversely moving cylinder 1724 is connected to the stop plate 1727. The piston rod of the transversely moving cylinder 1724 extends out and retracts, so as to drive the sliding seat 1721 to move in the front-back direction, thereby driving the bottom holding rod 171 to move in the front-back direction.

A cylinder barrel of the lifting cylinder 1725 is arranged on the first connector 17211 and is spaced apart from the transversely moving cylinder 1724 in the left-right direction. A portion of the bottom holding rod 171 movably penetrates the third connector 17213 and is connected to a piston rod of the lifting cylinder 1725. In this case, the piston rod of the lifting cylinder 1725 extends out and retracts, so as to drive the bottom holding rod 171 to move in the up-down direction. The two second position sensors 1726 are spaced apart on the second connector 17212 in the up-down direction, and are configured to determine a stroke of the lifting cylinder 1725, namely, a position of the bottom holding rod 171. When the bottom holding rod 171 is at the lowest position, it indicates that the bottom holding rod 171 is in the vertical third position. When the bottom holding rod 171 is at the highest position, it indicates that the bottom holding rod 171 is in the vertical fourth position.

When the grabbing apparatus 1 is in the initial state, the piston rod of the transversely moving cylinder 1724 extends out, and the piston rod of the lifting cylinder 1725 retracts, so that the bottom holding rod 171 is located at the transverse first position and the vertical fourth position. In this case, the anti-falling mechanism 17 can press upwards the mounting bolt under the bearing portion 12232, so that shaking of the first clamping plate 1223 caused by falling down of the mounting bolt can be avoided. When the grabbing apparatus 1 grabs the battery cell 2, the piston rod of the transversely moving cylinder 1724 extends out, and the piston rod of the lifting cylinder 1725 extends out, so that the bottom holding rod 171 is located at the transverse first position and the vertical third position. In this case, the anti-falling mechanism 17 can press downwards foam accommodating the battery cell 2, so that lifting of the foam during grabbing of the battery cell 2 can be avoided. When the grabbing mechanism grabs the battery cell 2 for loading, the piston rod of the transversely moving cylinder 1724 retracts, and the piston rod of the lifting cylinder 1725 retracts, so that the bottom holding rod 171 is located at the transverse second position and the vertical fourth position. In this case, bottom holding support can be provided for a bottom of the battery cell 2, so that falling down of the battery cell 2 is avoided.

Due to arrangement of the two second position sensors 1726, positions of the bottom holding rod 171 can be determined, so that safety detection for bottom holding is realized, and safety is high.

In some embodiments, refer to FIG. 1 and FIG. 2. The grabbing apparatus 1 further includes a deviation correction apparatus 18. The deviation correction apparatus 18 is arranged on the rack 11 and configured to identify a model, dimension, and position of the battery cell 2.

For example, the grabbing apparatus 1 includes a connecting arm 19. One end of the connecting arm 19 is connected to the mounting frame 112. The other end of the connecting arm 19 is connected to the deviation correction apparatus 18. In this case, a battery cell 2 below a side of the grabbing apparatus 1 away from the battery cell 2 in the front-back direction can be detected to obtain the model, dimension, and position of the battery cell 2, so that convenience is brought for subsequent positioning of the grabbing apparatus 1. Therefore, grabbing of the battery cell 2 can be realized precisely.

For example, in some embodiments, the deviation correction apparatus 18 may be a deviation correction camera that may shoot or scan the battery cell 2 to obtain the model, dimension, and position of the battery cell 2.

For example, in some embodiments, two deviation correction apparatuses 18 are provided. The two deviation correction apparatuses 18 are spaced apart in the left-right direction, so as to detect a loaded battery cell 2 in the left-right direction. Therefore, relatively comprehensive information of the battery cells 2 can be obtained.

An embodiment of this disclosure further provides a grabbing device. The grabbing device includes a manipulator and the grabbing apparatus 1 in any embodiment of this disclosure. The manipulator is configured to be capable of driving the grabbing apparatus 1 to rotate and/or move. When grabbing the battery cell 2, the manipulator drives the grabbing apparatus 1 to move to a position above the battery cell 2; the deviation correction apparatus 18 extracts information of the battery cell 2; then, the distance varying mechanism 13 operates to control the two clamping plate assemblies to move, so as to grab and tightly clamp the battery cell 2; and finally, the anti-falling mechanism 17 operates to control the bottom holding rod 171, so as to provide bottom holding support for the bottom of the battery cell 2.

An embodiment of this disclosure further provides a battery production line, including a first conveyor line, a second conveyor line, and the grabbing device in the foregoing embodiments. The first conveyor line is configured to convey battery cells 2 to be grabbed. The grabbing device is configured to grab battery cells 2 on the first conveyor line and place the battery cells on the second conveyor line. In some embodiments, the battery production line includes a tray. The tray is placed on the second conveyor line. A grabbed battery cell 2 may be placed on the tray, so as to be conveyed to a position for a subsequent process. The first conveyor line can convey the battery cells 2 to be grabbed to a position near the grabbing device; and these battery cells 2 to be grabbed may be grabbed by the manipulator or the like, so as to be placed in the tray.

For example, the first conveyor line and the second conveyor line may be conveyor belts, for example, may be ribbons such as belts, or may be multiple roll shafts arranged side by side, or may be multiple chains or the like.

The battery production line can quickly grab and place the battery cell 2 in an automated manner, so that efficiency is better. In addition, because the battery cell 2 is placed on the tray, the battery cell 2 can be directly conveyed by using the tray to a next processing apparatus.

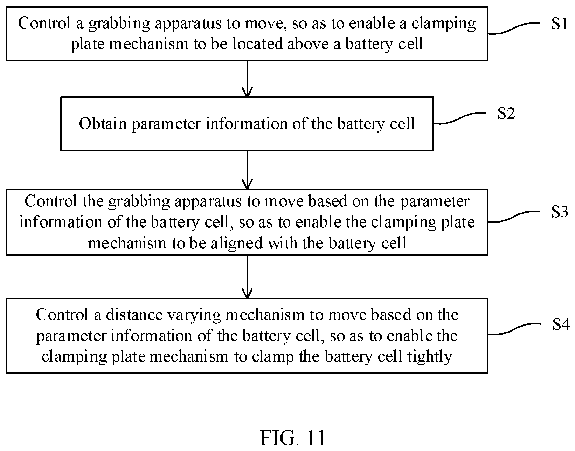

Based on the foregoing embodiments, the grabbing device may also be controlled by a control device. For example, the control device may be a PLC device. Therefore, an embodiment of this disclosure further provides a control method for a grabbing device, applied to the grabbing device. Refer to FIG. 11. The control method includes the following steps.

S1. Control the grabbing apparatus to move, so as to enable the clamping plate mechanism to be located above a battery cell.

For example, the PLC device may send a grabbing in-place signal to a manipulator; and the manipulator responds to the grabbing in-place signal and drives the grabbing apparatus 1 to move, so as to enable the clamping plate mechanism 12 to be located above the battery cell 2.

S2. Obtain parameter information of the battery cell.

For example, after the clamping plate mechanism 12 reaches a position above the battery cell 2, the manipulator may send a scanning in-place signal to the PLC device; and the PLC device responds to the scanning in-place signal and sends a scanning signal to the grabbing apparatus 1, so as to scan the battery cell 2 and obtain its parameter information, where the parameter information includes a dimension, a model, a position, and the like.

S3. Control the grabbing apparatus to move based on the parameter information of the battery cell, so as to enable the clamping plate mechanism to be aligned with the battery cell.

For example, the PLC device responds to the parameter information of the battery cell 2 and controls the manipulator to drive the grabbing apparatus 1 to move, so as to align the clamping plate mechanism 12 with the battery cell 2.

S4. Control the distance varying mechanism to move based on the parameter information of the battery cell, so as to enable the clamping plate mechanism to clamp the battery cell tightly.

For example, after the clamping plate mechanism 12 is aligned with the battery cell 2, the manipulator may send an aligning in-place signal to the PLC device; the PLC device responds to the aligning in-place signal and sends a grabbing signal to the distance varying mechanism 13; and the distance varying mechanism 13 moves in response to the grabbing signal, so as to adjust a distance between the two clamping plate assemblies to clamp the battery cell 2 tightly.

In an embodiment, the step S2 of obtaining parameter information of the battery cell specifically includes the following step:
S21. Control a deviation correction apparatus to obtain the parameter information of the battery cell.

For example, the deviation correction apparatus 18 may be a deviation correction camera. The deviation correction apparatus 18 may respond to the scanning signal sent by the PLC device, so as to take a picture of and scan the battery cell 2 and send related data to the PLC device; and the PLC device receives the related data and obtains parameter information of a current battery cell 2 by calling an interface of an MES (Manufacturing Execution System) server.

In an embodiment, the step S4 of controlling the distance varying mechanism to move based on the parameter information of the battery cell, so as to enable the clamping plate mechanism to clamp the battery cell tightly specifically includes the following steps.

S41. Control a distance varying assembly of the distance varying mechanism to move based on the parameter information of the battery cell, so as to ensure that two clamping plate assemblies of the clamping plate mechanism are at a first distance from each other.

For example, based on the parameter information of the current battery cell 2, the PLC device sends a first grabbing signal to the distance varying assembly 131 of the distance varying mechanism 13; and the distance varying assembly 131 moves in response to the first grabbing signal, so as to ensure that the two clamping plate assemblies are at a first distance.

S42. Control a clamping assembly of the distance varying mechanism to move, so as to ensure that the two clamping plate assemblies are at a second distance for clamping the battery cell tightly, where the second distance is smaller than the first distance.

For example, after the two clamping plate assemblies are at the first distance, the distance varying assembly 131 may send a first in-place signal to the PLC device; the PLC device responds to the first in-place signal and sends a second grabbing signal to the clamping assembly 133; and the clamping assembly 133 moves in response to the second grabbing signal. When the sensor plate 152 moves into the sensing groove of the clamping limit position sensor 1511, it indicates that the two clamping plate assemblies are at the second distance for clamping the battery cell 2 tightly.

In an embodiment, after the step S4 of controlling the distance varying mechanism to move based on the parameter information of the battery cell, so as to enable the clamping plate mechanism to clamp the battery cell tightly, the control method includes the following steps.

S5. Control the grabbing apparatus to move, so as to enable the grabbing apparatus to be located at a safe height.

For example, when the sensor plate 152 moves into the sensing groove of the clamping limit position sensor 1511, the clamping limit position sensor 1511 may send a second in-place signal to the PLC device; the PLC device responds to the second in-place signal and sends a moving signal to the manipulator; and the manipulator responds to the moving signal and drives the grabbing apparatus 1 to move, so as to ensure that the grabbing apparatus 1 moves to a safe height.

S6. Control an anti-falling mechanism to move, so as to enable the anti-falling mechanism to extend to a bottom of the battery cell.

For example, after the grabbing apparatus 1 clamps the battery cell 2 tightly and moves it to the safe height, the manipulator may send a moving in-place signal to the PLC device; the PLC device responds to the moving in-place signal and sends a bottom holding signal to the transversely moving and lifting assembly 172; and the transversely moving and lifting assembly 172 responds to the bottom holding signal and moves, so as to drive the bottom holding rod 171 to the bottom of the battery cell 2 for bottom holding support.

S7. Control the grabbing apparatus to move to above an unloading position.

For example, when the bottom holding rod 171 is in the transverse second position and the vertical fourth position, the transversely moving and lifting assembly 172 may send a bottom holding in-place signal to the PLC device; the PLC device responds to the bottom holding in-place signal and sends an unloading signal to the manipulator; and the manipulator moves in response to the unloading signal, so as to drive the grabbing apparatus 1 to move to an unloading position, for example, above a tray.

S8. Control the anti-falling mechanism to move, so as to enable the anti-falling mechanism to retract to an original position.

For example, after the grabbing apparatus 1 moves to above the tray, the manipulator may send a loading in-place signal to the PLC device; and the PLC device responds to the loading in-place signal and sends a retraction signal to the transversely moving and lifting assembly 172, so as to drive the bottom holding rod 171 to move to the original position.

S9. Control the clamping plate mechanism to move, so as to unload the battery cell to the unloading position, for example, above a tray.

For example, after the bottom holding rod 171 moves to the original position, the transversely moving and lifting assembly 172 may send a retraction in-place signal to the PLC device; and the PLC device responds to the retraction in-place signal and sends a discharging signal to the distance varying mechanism 13, so as to drive the clamping plate mechanism 12 to move and release the battery cell 2 onto the tray.

S10. Control the grabbing apparatus to move to a safe position to wait for a signal.

For example, after driving the clamping plate mechanism 12 to move and release the battery cell 2 onto the tray, the distance varying mechanism 13 may send a discharging in-place signal to the PLC device; the PLC device responds to the discharging in-place signal and sends a return signal to the manipulator; and the manipulator responds to the return signal and drives the grabbing apparatus 1 to move to the safe position to wait for the signal.

The foregoing embodiments are only used to illustrate the technical solutions of this disclosure and are not intended to limit this disclosure. Although this disclosure has been described in detail with reference to the foregoing embodiments, those of ordinary skills in the art should understand that, they can still make modifications to the technical solutions described in the foregoing embodiments or make equivalent substitutions to some or all of the technical features. These modifications or replacements do not make the essence of the corresponding technical solutions depart from the scope of the technical solutions of the embodiments of this disclosure, which shall be included in the scope of this specification of this disclosure. In particular, as long as there is no structural conflict, the various technical features mentioned in the embodiments can be combined in any manners.

### Industrial applicability

In an embodiment of this disclosure, a rack is provided and is connected to a mechanical arm of a manipulator, so that the rack can be driven to move and/or rotate to complete a subsequent loading operation. A reference clamping plate assembly and a floatable clamping plate assembly are provided. During grabbing of a battery cell, the reference clamping plate assembly can provide a clamping reference for the battery cell, so that shaking of the battery cell is reduced, and clamping stability is improved. Then, in cooperation with the floatable clamping plate assembly, multiple battery cells can be flexibly clamped tightly, so that damage to the battery cells is reduced. A distance varying mechanism is provided and is drivably connected to the floatable clamping plate assembly and the reference clamping plate assembly, so that a distance between the floatable clamping plate assembly and the battery cell and a distance between the reference clamping plate assembly and the battery cell can be adjusted simultaneously by driving the distance varying mechanism, so as to grab or release the battery cell. In one aspect, balanced and stable forces can be applied on two sides of the battery cell, so as to reduce a risk that the battery cell loses its balance or slips down. In another aspect, the floatable clamping plate assembly and the reference clamping plate assembly move simultaneously, so that a grabbing speed and a releasing speed of the battery cell can be accelerated, and the efficiency is high. In still another aspect, the distance varying mechanism adjusts a distance between the floatable clamping plate assembly and the reference clamping plate assembly, so that battery cells with different dimensions can be grabbed, and the battery cells with different dimensions are infinitely compatible. Therefore, the adaptability and the universality are high.

## Claims

1. A grabbing apparatus, comprising:
a rack, configured to connect to a manipulator;
a clamping plate mechanism, comprising two clamping plate assemblies spaced apart and configured to clamp multiple battery cells; and
a distance varying mechanism, arranged on the rack and drivably connected to the two clamping plate assemblies to adjust a distance between the two clamping plate assemblies;
wherein the two clamping plate assemblies are a reference clamping plate assembly and a floatable clamping plate assembly, the reference clamping plate assembly is capable of providing a clamping reference for the multiple battery cells, and the floatable clamping plate assembly is capable of clamping each battery cell tightly.

2. The grabbing apparatus according to claim 1, wherein the distance varying mechanism comprises:
a distance varying assembly, arranged on the rack;
two first base plates, spaced apart at two ends of the distance varying assembly in a distance varying direction respectively, wherein the distance varying assembly is drivably connected to the two first base plates to adjust a distance between the two first base plates; and
a clamping assembly, arranged on the first base plate and drivably connected to a corresponding clamping plate assembly to adjust the distance between the two clamping plate assemblies.

3. The grabbing apparatus according to claim 2, wherein the distance varying assembly comprises:
a distance varying motor, arranged on the rack;
a distance varying lead screw, wherein the distance varying motor is drivably connected to the distance varying lead screw;
two screw nuts, drivably connected to the distance varying lead screw, wherein each screw nut is connected to a corresponding first base plate;
a distance varying slide rail, arranged on the rack; and
distance varying sliders, wherein the distance varying slider is provided on each first base plate or the distance varying slider is provided on each screw nut, and the distance varying slider is capable of sliding on the distance varying slide rail in a fitted manner under the driving of the screw nut.

4. The grabbing apparatus according to claim 3, wherein two distance varying slide rails are provided, the two distance varying slide rails are spaced apart on two sides of the rack in the distance varying direction respectively, each first base plate is provided with two distance varying sliders spaced apart, and each distance varying slider is in sliding fit with a corresponding distance varying slide rail.

5. The grabbing apparatus according to claim 2, wherein the clamping assembly comprises:
a clamping drive assembly, arranged on the first base plate;
a clamping slide rail, arranged on the first base plate; and
a clamping slider, connected to a corresponding clamping plate assembly, wherein the clamping drive assembly is capable of driving the clamping slider to slide along the clamping slide rail, so as to adjust the distance between the two clamping plate assemblies.

6. The grabbing apparatus according to claim 5, wherein the clamping drive assembly comprises:
a clamping cylinder, arranged on the first base plate;
a transmission slide rail, arranged on the first base plate;
a transmission slider, drivably connected to the clamping cylinder, wherein the transmission slider is capable of sliding on the transmission slide rail in a fitted manner under the driving of the clamping cylinder;
a transmission assembly, connected to the transmission slider; and
a transmission guide plate, arranged on a corresponding clamping plate assembly, wherein the transmission assembly is capable of moving with the transmission guide plate in a fitted manner, so as to cause the clamping slider to slide along the clamping slide rail.

7. The grabbing apparatus according to claim 6, wherein an elongated hole is obliquely formed in the transmission guide plate, and the transmission assembly comprises:
a transmission seat, connected to the transmission slider, wherein the clamping cylinder is connected to the transmission seat;
a transmission part, connected to the transmission seat; and
a transmission wheel, connected to the transmission part, wherein the transmission wheel is located in the elongated hole and is capable of moving in the elongated hole.

8. The grabbing apparatus according to claim 7, wherein two transmission slide rails and two transmission sliders are provided, the two transmission slide rails are spaced apart on the first base plate, an extension direction of the transmission slide rail is perpendicular to an extension direction of the clamping slide rail, the two transmission sliders are spaced apart on the transmission seat, and each transmission slider is in sliding fit with a corresponding transmission slide rail; and/or
the transmission part comprises two vertical plates spaced apart, a transverse plate connected between the two vertical plates, a transmission rod, and a mounting nut, wherein the transmission wheel is mounted at one end of the transmission rod, the other end of the transmission rod penetrates the transverse plate and is located between the two vertical plates, and the mounting nut fastens the transmission rod onto the transverse plate.

9. The grabbing apparatus according to claim 6, wherein four clamping drive assemblies are provided, and each first base plate is provided with two clamping drive assemblies spaced apart.

10. The grabbing apparatus according to claim 6, further comprising:
multiple stroke limiting members, each configured to limit a stroke of a corresponding clamping cylinder.

11. The grabbing apparatus according to claim 10, wherein the stroke limiting member comprises a hydraulic buffer and/or a rigid limiting member.

12. The grabbing apparatus according to claim 6, further comprising:
multiple position detection mechanisms, each configured to detect a position of a corresponding transmission slider.

13. The grabbing apparatus according to claim 12, wherein the position detection mechanism comprises:
multiple first position sensors, spaced apart on the first base plate and configured to detect a position of the transmission slider; and
a sensor plate, arranged on the transmission assembly or the transmission slider and configured to sense the first position sensor.

14. The grabbing apparatus according to claim 13, wherein the first position sensors are a loosening limit position sensor and a clamping limit position sensor; and
the loosening limit position sensor is configured to detect a maximum limit position of the transmission slider, and the clamping limit position sensor is configured to detect a minimum limit position of the transmission slider.

15. The grabbing apparatus according to claim 1, wherein the reference clamping plate assembly comprises:
a second base plate, drivably connected to the distance varying mechanism;
a first back plate, connected to the second base plate; and
multiple first clamping plates, mounted on the first back plate side by side, fixed relative to the first back plate, and configured to clamp the battery cell.

16. The grabbing apparatus according to claim 15, further comprising:
multiple battery cell sensors, spaced apart on the first back plate and configured to detect the battery cell.

17. The grabbing apparatus according to claim 1, wherein the floatable clamping plate assembly comprises:
a third base plate, drivably connected to the distance varying mechanism;
a second back plate, connected to the third base plate; and
multiple floatable clamping plate kits, mounted on the second back plate side by side, capable of moving in a distance varying direction relative to the second back plate, and configured to clamp the battery cell.

18. The grabbing apparatus according to claim 17, wherein the floatable clamping plate kit comprises:
a floatable clamping plate, configured to clamp the battery cell;
a floatable back plate, wherein the floatable back plate and the floatable clamping plate are respectively located on two sides of the second back plate;
a connecting screw rod, penetrating the floatable back plate and connected to the floatable clamping plate;
an elastic member, located between the floatable clamping plate and the second back plate; and
a sleeve, located between the floatable back plate and the second back plate.

19. The grabbing apparatus according to claim 17, wherein multiple second back plates are provided, the multiple second back plates are arranged side by side on the third base plate, and multiple floatable clamping plate kits are provided on each second back plate.

20. The grabbing apparatus according to claim 19, wherein multiple mounting slide grooves are formed in the third base plate side by side, a mounting slide plate is provided on the second back plate, the mounting slide plate is arranged in the mounting slide groove, and the mounting slide plate is tightly connected to the third base plate; and/or
the floatable clamping plate assembly further comprises a pull handle arranged on the second back plate.

21. The grabbing apparatus according to claim 18, wherein the floatable clamping plates are configured in such a manner that each battery cell is clamped by at least two floatable clamping plates.

22. The grabbing apparatus according to any one of claims 1 to 19, further comprising:
an anti-falling mechanism, arranged on the distance varying mechanism and provided with a transverse first position, a transverse second position, a vertical third position, and a vertical fourth position, wherein
when being located at the transverse first position and the vertical fourth position, the anti-falling mechanism is configured to prevent a mounting bolt of the clamping plate assembly from falling down;
when being located at the transverse first position and the vertical third position, the anti-falling mechanism is configured to press foam for the battery cell during grabbing of the battery cell; and
when being located at the transverse second position and the vertical fourth position, the anti-falling mechanism is configured to prevent the battery cell from falling down.

23. The grabbing apparatus according to claim 22, wherein the anti-falling mechanism comprises:
a bottom holding rod; and
two transversely moving and lifting assemblies, respectively arranged at two ends of the distance varying mechanism, wherein each transversely moving and lifting assembly is connected to one end of the bottom holding rod, and the transversely moving and lifting assembly comprises:
a sliding seat;
a transversely moving slide rail, arranged on the distance varying mechanism;
a transversely moving slider, arranged on the sliding seat;
a transversely moving cylinder, arranged on the sliding seat and drivably connected to the transversely moving slide rail, so as to enable the transversely moving slider to slide on the transversely moving slide rail in a fitted manner;
a lifting cylinder, arranged on the sliding seat, wherein the lifting cylinder is drivably connected to the bottom holding rod and is capable of causing the bottom holding rod to move up and down; and
two second position sensors, arranged on the sliding seat and configured to detect the lowest position and the highest position of the bottom holding rod respectively.

24. The grabbing apparatus according to any one of claims 1 to 19, further comprising:
a deviation correction apparatus, arranged on the rack and configured to identify a model, dimension, and position of the battery cell.

25. A grabbing device, comprising a manipulator and the grabbing apparatus according to any one of claims 1 to 24, wherein the manipulator is configured to be capable of driving the grabbing apparatus to rotate and/or move.

26. A battery production line, comprising a first conveyor line, a second conveyor line, and the grabbing device according to claim 25, wherein the first conveyor line is configured to convey battery cells to be grabbed, and the grabbing device is configured to grab battery cells on the first conveyor line and place the battery cells on the second conveyor line.

27. A control method, applied to the grabbing device according to claim 25, wherein the control method comprises:
controlling the grabbing apparatus to move, so as to enable the clamping plate mechanism to be located above a battery cell;
obtaining parameter information of the battery cell;
controlling the grabbing apparatus to move based on the parameter information of the battery cell, so as to enable the clamping plate mechanism to be aligned with the battery cell; and
controlling the distance varying mechanism to move based on the parameter information of the battery cell, so as to enable the clamping plate mechanism to clamp the battery cell tightly.

28. The control method according to claim 27, wherein the step of obtaining parameter information of the battery cell specifically comprises:
controlling a deviation correction apparatus to obtain the parameter information of the battery cell.

29. The control method according to claim 27, wherein the step of controlling the distance varying mechanism to move based on the parameter information of the battery cell, so as to enable the clamping plate mechanism to clamp the battery cell tightly specifically comprises:
controlling a distance varying assembly of the distance varying mechanism to move based on the parameter information of the battery cell, so as to ensure that two clamping plate assemblies of the clamping plate mechanism are at a first distance from each other; and
controlling a clamping assembly of the distance varying mechanism to move, so as to ensure that the two clamping plate assemblies are at a second distance for clamping the battery cell tightly, wherein the second distance is smaller than the first distance.

30. The control method according to claim 27, wherein after the step of controlling the distance varying mechanism to move based on the parameter information of the battery cell, so as to enable the clamping plate mechanism to clamp the battery cell tightly, the control method comprises:
controlling the grabbing apparatus to move, so as to enable the grabbing apparatus to be located at a safe height;
controlling an anti-falling mechanism to move, so as to enable the anti-falling mechanism to extend to a bottom of the battery cell;
controlling the grabbing apparatus to move to above an unloading position;
controlling the anti-falling mechanism to move, so as to enable the anti-falling mechanism to retract to an original position;
controlling the clamping plate mechanism to move, so as to unload the battery cell to the unloading position; and
controlling the grabbing apparatus to move to a safe position to wait for a signal.
